# FASCICULE DE BREVET EUROPEEN

(11) **EP 0 407 240 B1**
(45) Date de publication et mention de la délivrance du brevet: **15.02.1995**
(21) Numéro de dépôt: 90401634.2
(22) Date de dépôt: 13.06.1990
(51) Int. Cl.: B23K 23/00

(54) **Dispositif et soudure aluminothermique, creuset et couvercle de creuset entrant dans sa composition**
Vorrichtung und aluminothermische Schweissung, Tiegel und in seine Struktur hineingehende Tiegelabdeckung
Device and aluminothermic welding, crucible and its structure entering crucible covering cap

(30) Priorité: 14.06.1989 FR 8907872
(43) Date de publication de la demande: 09.01.1991
(73) Titulaire: RAILTECH INTERNATIONAL, F-59 Raismes (FR)
(72) Inventeur: Bommart, Patrick, F-92500 Rueil Malmaison (FR)
(74) Mandataire: Martin, Jean-Jacques

(56) Documents cités:
- DE-C- 495 777
- DE-C- 548 528
- FR-A- 2 396 620
- US-A- 3 091 825
- US-A- 3 242 538

## Description

La présente invention concerne un dispositif de soudure aluminothermique, destiné à l'aboutement de deux pièces métalliques telles que des rails de chemin de fer, ainsi qu'un creuset et un couvercle de creuset entrant dans la composition de ce dispositif.

Plus particulièrement, elle concerne des perfectionnements apportés aux dispositifs de soudure aluminothermique de type connu, comportant :
- un creuset délimitant une chambre de réaction aluminothermique et destiné à être utilisé dans une orientation déterminée de creuset dans laquelle le creuset présente en partie inférieure un trou de coulée débouchant vers le haut dans ladite chambre et vers le bas dans une face inférieure, extérieure, du creuset suivant un axe vertical déterminé du creuset,
- un moule propre à s'emboîter localement sur les deux pièces métalliques en délimitant autour d'elles une empreinte de moulage, dans une orientation déterminée de moule dans laquelle le moule présente en partie supérieure un godet de coulée débouchant vers le bas dans ladite empreinte et vers le haut dans une face supérieure, extérieure, du moule suivant un axe vertical déterminé du moule.

De tels dispositifs sont bien connus, sous diverses formes, et utilises pour souder bout à bout, in situ, des pièces métalliques très diverses, généralement en fer ou en acier, la plupart du temps orientées horizontalement ou approximativement horizontalement au moins de façon localisée de part et d'autre de la soudure à réaliser, comme par exemple des rails de chemin de fer, des ronds à béton, des câbles.

Selon leur mode de réalisation le plus répandu, ils comportent un creuset durable, c'est-à-dire destiné à servir plusieurs fois et réalisé à cet effet en métal doublé de matériau réfractaire, par exemple selon les enseignements de DE-C- 548 528, et un moule quant a lui destiné à un usage unique, c'est-à-dire destiné à être détruit après une opération de soudure, et réalisé à cet effet en sable aggloméré au silicate et durci au gaz carbonique, matériau présentant une bonne résistance à l'échauffement lui permettant d'une part de subir sans dommage l'écoulement de métal résultant de la réaction aluminothermique et d'autre part d'être soumis, préalablement à la soudure mais après sa mise en place sur les pièces à souder, à un préchauffage permettant d'en chasser toute trace d'humidité qui pourrait nuire à la qualité de la soudure ; ce préchauffage permet également de porter les pièces à souder, au moins localement à l'intérieur de l'empreinte du moule, à une température favorable à la soudure.

En vue de la soudure, après le préchauffage précité du moule, le creuset supporté par une potence ou un trépied et muni d'une réhausse métallique prolongeant la chambre de réaction vers le haut pour contenir la composition aluminothermique avant la réaction aluminothermique et d'un couvercle métallique destiné à éviter toute projection lors de la réaction aluminothermique est amené au-dessus du moule, dans une position dans laquelle le trou de coulée débouche coaxialement au-dessus du godet de coulée, et la réaction aluminothermique est initiée dans la chambre de reaction ; lorsqu'une température déterminée est atteinte, le trou de coulée initialement fermé par exemple par un obturateur thermofusible s'ouvre par exemple par fusion de cet obturateur et le métal en fusion résultant de la réaction aluminothermique s'écoule vers l'empreinte du moule, entre les pièces à souder et, localement, autour d'elles, en franchissant au niveau du godet de coulée une chicane constituée par une pièce emboîtée évitant une descente directe de ce métal vers l'empreinte.

Cette technique connue permet de réaliser des soudures d'excellente qualité, mais elle présente l'inconvénient d'imposer à l'utilisateur un certain nombre de contraintes, dont certaines sont d'ailleurs une condition nécessaire d'obtention de telles soudures de qualité.

Certaines de ces contraintes sont liées au poids important du creuset, résultant directement de la constitution de celui-ci, qui d'une part est incommode à transporter d'un lieu de soudure à un autre et d'autre part nécessite, pour son support par rapport aux pièces à souder et par rapport au moule, une potence ou un trépied eux-mêmes lourds et encombrants, c'est-à-dire pénibles à transporter d'un lieu de soudure à un autre. La réhausse et le couvercle métalliques complétant le creuset sont eux-mêmes lourds et incommodes à transporter.

En outre, cette technique connue présente un inconvénient en ce que le positionnement du creuset par rapport au moule, en vue d'une soudure, laisse une grande part à l'initiative et à l'appréciation de l'utilisateur ; or, d'une part, la subsistance d'un décalage trop important, dans le sens de la hauteur, entre le trou de coulée et le godet de coulée peut nuire à la qualité de la soudure en provoquant une oxydation et un refroidissement trop rapide du métal s'écoulant à la suite de la réaction aluminothermique, en raison d'un contact trop important de ce dernier avec l'air ambiant, et en autorisant une prise de vitesse de ce métal suffisamment importante pour que celui-ci entraîne dans la soudure du sable du moule, par effet d'érosion, et/ou du corindon, par un effet d'aspiration apparaissant à la fin de la coulée du métal ; d'autre part, un désaxement relatif du trou de coulée et du godet de coulée peut entraîner du corindon dans la soudure par ce même effet d'aspiration s'il entraîne un écoulement direct du métal vers l'empreinte du moule, c'est-à-dire un écoulement à côté de la pièce emboîtée formant chicane.

Enfin, en raison d'une grande affinité, pour l'eau, du matériau réfractaire entrant dans la composition du creuset, ce dernier doit être, avant sa mise en service, soumis à une réaction aluminothermique "perdue", c'est-à-dire non destinée à réaliser une soudure et ayant pour seul but d'éliminer du creuset toute trace d'humidité qui, si elle subsistait alors qu'a lieu une réaction aluminothermique destinée à une soudure, produirait dans cette soudure l'apparition de bulles affaiblissant considérablement ses caractéristiques mécaniques ; pour cette raison également, il est nécessaire de pratiquer un séchage préalable du creuset, au moyen d'un chalumeau, au début de chaque journée d'utilisation.

Pour tenter de remédier à ces inconvénients, on a proposé, par exemple dans les brevets américains N° 3 091 825 et N° 3 242 538, un creuset faisant corps avec le moule et comme lui destiné à être détruit après un usage unique.

Cette solution peut paraître avantageuse puisqu'elle élimine la nécessité de transporter le creuset d'un lieu de soudure à l'autre et, du fait que le positionnement du creuset par rapport au moule ne résulte que d'un positionnement correct de ce dernier, par fermeture et assemblage mutuel de deux coquilles le constituant de même que le creuset, sur les pièces métalliques à souder, permet d'une part de se dispenser de tout support auxiliaire et d'autre part assure en permanence un positionnement correct du creuset par rapport au moule, notamment sans risque de contact prolongé du métal en fusion avec l'air ambiant et sans risque d'une prise excessive de vitesse par le métal en fusion.

Cependant, cette solution présente un inconvénient grave en ce que le moule ne peut être préchauffé, dans le but d'en éliminer toute trace d'humidité avant la soudure et de porter localement les pièces à souder à une température favorable à cette soudure ; en effet, dès lors que les deux coquilles sont assemblées autour des pièces à souder, l'empreinte du moule et les zones correspondantes des pièces à souder deviennent difficilement accessibles à la flamme d'un chalumeau ou à tout autre moyen de préchauffage ; de ce fait, on est contraint d'utiliser, pour réaliser l'ensemble du moule et du creuset, un matériau qui présente une faible affinité pour l'eau tout en étant facilement destructible après la soudure, à savoir en pratique un sable aggloméré au moyen d'une résine hydrophobe telle que de la bakélite, qui présente l'inconvénient de mal résister aux températures mises en jeu, ce qui est admissible au niveau du creuset qui peut s'auto-détruire rapidement mais non au niveau du moule qui doit conserver sa cohésion comparativement plus longtemps.

On a également proposé, dans DE-C-495 777, qui sert de base à la subdivision de la revendication 1 en préambule et partie caractérisante, de mettre en oeuvre une technique dite "de soudure combinée" des rails de chemin de fer, consistant à n'effectuer par soudure aluminothermique que la liaison entre les parties inférieures respectives des rails à assembler, dont les parties supérieures sont quant à elles liées par forgeage ou matage sur une plaque intermédiaire dite "plaque soudante", au moyen d'un équipage durable que l'on assemble de façon amovible autour des deux abouts de rail et de la plaque soudante convenablement positionnée entre eux, et qui comporte une partie inférieure et une partie supérieure nettement différenciées dans leur structure, et en pratique adaptées à des fonctions différentes.

La partie inférieure, placée sous les patins des rails et les enveloppant partiellement, présente la forme d'une boîte, par exemple métallique, garnie intérieurement de sable de fonderie pour délimiter au niveau du patin des rails une empreinte de moulage, destinée à recevoir un métal d'apport obtenu par réaction aluminothermique dans un creuset, pour effectuer la soudure aluminothermique des rails à ce niveau. La partie supérieure, assemblée de façon amovible à cette partie inférieure vis-à-vis de laquelle elle est étanchéifiée par lutage, est elle-même formée d'un assemblage de plusieurs pièces, par exemple métalliques, qui délimite autour de la zone correspondant à la plaque soudante une cavité qui communique vers le bas avec l'empreinte de moulage définie par le sable de la partie inférieure mais ne constitue pas elle-même une empreinte de moulage. En effet, cette cavité, qui n'est d'ailleurs pas définie par du sable de fonderie, ne joue vis-à-vis du métal d'apport qu'un rôle de passage vers l'empreinte de moulage définie par le sable de la partie inférieure, et sa fonction essentielle est de recevoir le corindon qui s'écoule du creuset après le métal d'apport, et que l'on utilise pour chauffer la plaque soudante ainsi que les abouts des rails, qui s'en trouvent portés au blanc si bien qu'en manoeuvrant de façon appropriée un appareil de serrage prévu par ailleurs, de façon à serrer les deux rails l'un contre l'autre par l'intermédiaire de la plaque soudante, on peut provoquer le forgeage ou matage des abouts de rails sur cette plaque soudante. Ensuite, après refroidissement, on démonte la partie supérieure de l'équipage précité puis sa partie inférieure, que l'on utilisera l'une et l'autre pour d'autres soudures, puis on casse le corindon qui tend à rester aggloméré autour de la zone de la plaque soudante et, si nécessaire, on usine la jonction réalisée.

Dans ce contexte bien précis, DE-C-495 777 propose de faire porter directement le creuset sur l'équipage précité, ce qui permet de se dispenser d'un support spécifique au creuset et d'assurer sans précaution particulière un positionnement précis de celui-ci par rapport à l'équipage monté autour des abouts de rails, mais cet équipage, réalisé de façon durable comme le creuset lui-même, conserve l'inconvénient de poids important et de difficulté consécutive de transport d'un lieu de soudure à un autre, que l'on connait dans le cas des dispositifs de soudure aluminothermique les plus traditionnels, à creuset durable et potence ou trépied également durable de portage de ce creuset.

Le but de la présente invention est de remédier à la plupart des inconvénients de ces techniques connues, et de préférence à tous ces inconvénients.

A cet effet, la présente invention propose un dispositif de soudure aluminothermique, destiné à l'aboutement de deux pièces métalliques telles que des rails de chemin de fer, situées en regard l'une de l'autre de telle sorte que subsiste entre elles un espace, et comportant :
- un creuset délimitant une chambre de réaction aluminothermique et destiné à être utilisé dans une orientation déterminée de creuset dans laquelle le creuset présente en partie inférieure un trou de coulée débouchant vers le haut dans ladite chambre et vers le bas dans une face inférieure, extérieure, du creuset suivant un axe vertical déterminé du creuset,
- un moule propre à s'emboîter localement sur les deux pièces métalliques en délimitant autour d'elles une empreinte de moulage dans une orientation déterminée du moule dans laquelle le moule présente en partie supérieure un godet de coulée débouchant vers le bas dans ladite empreinte et vers le haut dans une face supérieure, extérieure, du moule suivant un axe vertical déterminé du moule,
lesdites faces respectivement inférieure du creuset et supérieure du moule présentant des creux et/ou reliefs respectifs mutuellement complémentaires, tels qu'ils définissent dans la face inférieure du creuset au moins une zone plane approximativement perpendiculaire à l'axe du creuset et dans la face supérieure du moule au moins une zone plane approximativement perpendiculaire à l'axe du moule et autorisent le dépôt du creuset sur le moule, avec emboîtement mutuel, dans une position d'utilisation dans laquelle le creuset et le moule occupent lesdites orientations respectivement de creuset et de moule, le trou de coulée et le godet de coulée sont coaxiaux, et lesdites zones planes respectives de la face inférieure du creuset et de la face supérieure du moule se font face mutuellement,
caractérisé en ce que le moule est constitué par un moule à usage unique, réalisé en un matériau facilitant sa destruction après la soudure, qui constitue ladite face supérieure et délimite intérieurement le godet de coulée et l'empreinte de moulage, propre à loger ledit espace ainsi que des zones respectives des pièces métalliques immédiatement adjacentes à celui-ci de telle sorte que, pour réaliser la soudure, un métal d'apport obtenu par réaction aluminothermique dans le creuset et remplissant l'empreinte de moulage par l'intermédiaire du trou de coulée et du godet de coulée emplisse ledit espace, et en ce que lesdits creux et/ou reliefs sont agencés de telle sorte que, dans ladite position d'utilisation, le creuset repose sur le moule par lesdites zones planes respectives, en appui mutuel à plat.

Ainsi, aucun support propre au creuset n'est plus nécessaire, puisque ce creuset est porté par le moule qui peut présenter une structure connue propre à permettre sa solidarisation avec les pièces métalliques à souder, qui supportent ainsi le moule directement et le creuset indirectement ; on est de ce fait dispensé de transporter et de positionner tout support propre au creuset ; en outre, on est assuré de ce que le creuset est toujours correctement positionné par rapport au moule, dès lors que l'emboîtement mutuel signifie la coaxialité du trou de coulée et du godet de coulée et une mise à niveau prédéterminé du creuset par rapport au moule.

En outre, dès lors que le creuset est dissocié du moule, il est possible de les réaliser en des matériaux différents, choisis en fonction de critères spécifiques respectivement au creuset et au moule ; par exemple, en ce qui concerne le moule, on peut choisir comme il est traditionnel un sable aggloméré au silicate et durci au gaz carbonique, présentant l'inconvénient d'une certaine affinité pour l'eau mais se prêtant à un préchauffage au chalumeau préalablement à la soudure ; ce préchauffage peut concerner également les pièces métalliques à assembler, au moins dans leur zone localisée à l'intérieur de l'empreinte du moule, dans la mesure où ces pièces sont directement accessibles par le godet de coulée ; en ce qui concerne le creuset, on peut choisir une réalisation durable, par exemple à partir de métal doublé de matériau réfractaire comme il est connu en soi, ou encore une réalisation destinée à un usage unique, et par exemple en sable aggloméré au moyen d'une résine telle que de la bakélite, dont la faible affinité pour l'eau permet des stockages prolongés sans qu'il soit pour autant nécessaire de prendre des précautions de séchage du creuset avant utilisation et dont la résistance de faible durée aux températures atteintes lors de la réaction aluminothermique ne constitue pas un handicap en ce qui concerne le creuset ; dans le cas d'un creuset ainsi conçu en vue d'un usage unique, on donne de préférence à la chambre de réaction des dimensions telles qu'elle puisse contenir intégralement la charge aluminothermique avant la réaction aluminothermique, ce qui permet d'une part de se dispenser de réhausse rapportée, c'est-à-dire de limiter a un minimum le matériel durable à transporter d'un chantier de soudure à un autre, et d'autre part de conditionner la charge aluminothermique directement à l'intérieur du creuset, de façon particulièrement commode et peu encombrante.

L'emboîtement mutuel du creuset et du moule en position d'utilisation peut résulter de moyens simples en termes de structure, c'est-à-dire de moyens faciles et économiques de réalisation ; par exemple, lesdites faces respectivement inférieure du creuset et supérieure du moule présentent deux zones respectives qui sont orientées approximativement perpendiculairement respectivement à l'axe du creuset et à l'axe du moule et qui convergent mutuellement, notamment mais non exclusivement vers le bas, par exemple sur l'axe du creuset et sur l'axe du moule respectivement, en formant entre elles un dièdre d'angle proche de 180°, les dièdres formés respectivement par lesdites zones planes de la face inférieure du creuset et par lesdites zones planes de la face supérieure du moule étant mutuellement complémentaires de telle sorte que chacune desdites zones planes de la face inférieure du creuset soit en appui à plat sur une zone plane respectivement correspondante de la face supérieure du moule dans ladite position d'utilisation.

De préférence, lesdites faces respectivement inférieure du creuset et supérieure du moule présentent des formes telles qu'elles dégagent entre le creuset et le moule au moins un passage d'évent, reliant le godet de coulée à l'extérieur du creuset et du moule dans ladite position d'utilisation, ledit passage d'évent présentant de préférence une section croissant dans un sens allant du godet de coulée vers l'extérieur du creuset et du moule ; selon un mode de réalisation particulièrement simple, l'une au moins desdites zones planes de la face inférieure du creuset comporte une gorge délimitant ledit passage d'évent avec la zone plane respectivement correspondante de la face supérieure du creuset dans ladite position d'utilisation.

De même, de préférence, lesdites faces respectivement inférieure du creuset et supérieure du moule présentent des formes telles qu'elles dégagent entre le creuset et le moule au moins un passage de corindon, reliant le godet de coulée à l'extérieur du creuset et du moule dans ladite position d'utilisation ; selon un mode de réalisation particulièrement simple, l'une au moins desdites zones planes de la face supérieure du moule comporte une encoche délimitant ledit passage de corindon avec la zone plane respectivement correspondante de la face inférieure du creuset dans ladite position d'utilisation.

En remplacement ou, de préférence, en complément d'un appui de deux zones planes, mutuellement convergentes, de la face inférieure du creuset sur deux zones planes, également mutuellement convergentes, de la face supérieure du moule, l'emboîtement mutuel en position d'utilisation peut résulter de ce que, conformément à un mode de mise en oeuvre préféré de l'invention, la face inférieure du creuset présente autour du trou de coulée une couronne annulaire en saillie suivant ledit axe du creuset et propre à s'emboîter, avec jeu, dans le godet de coulée dans ladite position d'utilisation.

En outre, selon un mode de mise en oeuvre préféré du creuset, la face inférieure de celui-ci présente, respectivement de part et d'autre du trou de coulée, des butées en saillie disposées de telle sorte qu'elles longent latéralement le moule, respectivement de part et d'autre de ladite face supérieure de celui-ci, dans ladite position d'utilisation ; de préférence, lesdites butées présentent des extrémités libres respectives coplanaires suivant un plan perpendiculaire à l'axe du creuset et, lorsque le trou de coulée est entouré d'une couronne annulaire comme on l'a indique plus haut, cette couronne est placée en retrait par rapport audit plan, si bien que lesdites butées constituent des pieds permettant de poser le creuset au sol sans risque d'endommager la couronne.

Naturellement, comme il est connu en soi, le creuset peut comporter à l'intérieur du trou de coulée des moyens de réception d'un obturateur thermofusible ; dans le cas d'un creuset destiné à un usage unique, cet obturateur thermofusible est placé dès la fabrication à l'intérieur du trou de coulée, de façon particulièrement simple et économique.

Lorsque, en vue d'un usage unique, le creuset est réalisé en sable aggloméré au moyen d'une résine hydrophobe, c'est-à-dire susceptible de s'auto-détruire s'il est exposé trop longtemps à la température de la réaction aluminothermique, on prévoit de préférence que ce creuset présente un désépaississement localisé à l'aplomb du godet de coulée en position d'utilisation ; à cet effet, de préférence, le creuset présente à proximité du trou de coulée un trou borgne aménagé suivant un axe parallèle à l'axe du creuset et passant à l'intérieur du godet de coulée dans ladite position d'utilisation. Ce désépaississement localisé crée dans le creuset une zone affaiblie susceptible de se détruire plus rapidement que le reste du creuset en cas d'exposition prolongée à la température de la réaction aluminothermique pour autoriser un échappement guidé du métal et du corindon en fusion vers l'intérieur du moule dans l'hypothèse où l'obturateur du trou de coulée n'aurait pas ouvert celui-ci à temps ; on évite ainsi qu'à la suite d'un disfonctionnement de l'obturateur, le creuset cède dans une zone incontrôlée au risque de laisser le métal et le corindon en fusion se répandre au sol. Naturellement, lorsque le creuset est muni d'un obturateur thermofusible, le désépaississement précité est calibré de telle sorte que la zone affaiblie ainsi créée ne cède cependant qu'à une température supérieure à la température de fusion de cet obturateur dans des conditions normales de fonctionnement de celui-ci.

Dans ce même cas d'un creuset à usage unique, par exemple réalisé en sable aggloméré et lié au moyen d'une résine hydrophobe et alors que le creuset présente vers le haut, dans ladite orientation de creuset, un bord supérieur délimitant une ouverte supérieure de ladite chambre, le creuset comporte de préférence une frette annulaire qui longe ledit bord supérieur afin de le renforcer et qui peut se présenter sous forme intégrée au creuset, par exemple sous la forme d'un anneau notamment métallique noyé dans le bord supérieur de celui-ci lors de sa fabrication, ou encore être disposée extérieurement, autour dudit bord supérieur, par exemple sous forme d'un ruban d'un matériau polymère, épousant étroitement ledit bord et solidarisé avec lui, par exemple du fait d'un caractère auto-adhésif ou par thermo-rétractation, ou encore d'un ruban de papier ou de métal, ces exemples n'étant nullement limitatifs. De telles frettes peuvent également être prévus à d'autres niveaux, judicieusement choisis, pour éviter toute fissuration intempestive.

Le ruban précité peut avantageusement être rabattu sur le bord supérieur du creuset pour protéger celui-ci notamment dans le mode de réalisation préféré précité dans lequel on donne à la chambre de réaction des dimensions telles que l'on puisse se dispenser de réhausse rapportée et dans lequel, par conséquent, on pose directement sur le bord supérieur du creuset un couvercle rapporté, muni d'évents, pour fermer l'ouverture supérieure de la chambre de réaction lors de la réaction aluminothermique ; dans un tel cas, le couvercle rapporté, avantageusement réalisé comme le creuset en sable aggloméré et lié au moyen d'une résine hydrophobe pour presenter les mêmes caractéristiques de faible affinité pour l'eau et de facilité de destruction, est transporté à l'intérieur du creuset, en reposant sur le bord supérieur de celui-ci comme lors de l'utilisation, mais à l'état retourné ; la présence des moyens d'évent dans le couvercle peut avantageusement résulter de ce que le couvercle présente suivant l'axe du creuset une zone en dépression délimitant avec des zones adjacentes du couvercle au moins une lumière annulaire d'évent s'ouvrant vers l'extérieur du creuset en direction de l'axe du creuset, ce qui présente l'avantage d'éviter tout risque de projection hors du creuset lors de la réaction sans que le couvercle présente pour autant une hauteur trop importante ; en particulier, cette hauteur peut être compatible avec le conditionnement précité de la composition aluminothermique à l'intérieur de la chambre de réaction, entre le couvercle retourné et le trou de coulée.

On remarquera que, dès lors qu'ils ne sont utilisés qu'une seule fois, ce qui correspond à leur destination lorsqu'ils sont réalisés en sable aggloméré et lié au moyen d'une résine hydrophobe, le couvercle et le creuset présentent lors de cet usage unique des formes et dimensions parfaitement déterminées, à savoir les formes et dimensions qui leur ont été communiquées lors de leur fabrication et qui, de préférence, sont telles que le couvercle s'ajuste au mieux sur le creuset ; il est alors aisé de les étanchéifier mutuellement par exemple par lutage, si bien que les fumées et projections de particules résultant de la réaction aluminothermique ne peuvent s'échapper que par les moyens d'évent du couvercle, à savoir par la lumière annulaire d'évent selon le mode précité de réalisation du couvercle, ce qui d'une part contribue à la sécurité d'utilisation du creuset et d'autre part permet d'envisager une filtration efficace des fumées et particules projetées lorsque les conditions d'utilisation du dispositif selon l'invention rendent souhaitables une telle filtration, et par exemple lorsqu'on soude des rails dans un tunnel, du fait de la localisation de l'échappement des fumées et particules projetées au niveau des moyens d'évent.

Cette filtration peut mettre en oeuvre des moyens simples, peu encombrants et ne nécessitant aucun apport d'énergie, dans la mesure où l'on peut dimensionner les moyens d'évent de telle sorte qu'ils opposent à l'échappement des fumées une restriction suffisante pour communiquer à celles-ci une énergie directement exploitable en filtration.

Ainsi, selon un mode de mise en oeuvre préféré de la présente invention, le couvercle et le bord supérieur du creuset présentent des conformations respectives autorisant un appui mutuel sensiblement continu et une étanchéification mutuelle, et on peut alors prévoir une coiffe filtrante enveloppant au moins les moyens d'évent du couvercle, ce dernier et la coiffe filtrante présentant également des conformations respectives autorisant un appui mutuel sensiblement continu et une étanchéification mutuelle.

L'utilisation d'une telle coiffe filtrante permet de ne rejeter hors du dispositif selon l'invention que des fumées épurées, tolérables même en ambiance confinée, sans entraver la commodité de transport et d'utilisation du dispositif selon l'invention.

Naturellement, dans la mesure où le moule, le creuset et le couvercle de creuset d'un dispositif selon l'invention présentent en eux-mêmes des caractéristiques originales, la présente invention porte non seulement sur le dispositif de soudure formé de l'association du creuset, de son couvercle et du moule, mais également sur le creuset, le couvercle de creuset et le moule considérés isolément l'un de l'autre.

D'autres caractéristiques et avantages de l'invention ressortiront de la description ci-dessous, relative à un exemple de réalisation, ainsi que des dessins annexés qui font partie intégrante de cette description.
- La figure 1 montre une vue d'un dispositif de soudure selon l'invention en position d'utilisation, en vue de l'aboutement de deux rails de chemin de fer, placés horizontalement, en coupe par un plan vertical constituant pour le dispositif de même que pour chacun des deux rails un plan longitudinal de symétrie, repéré en I-I à la figure 2.
- La figure 2 montre une vue de ce même dispositif, à l'exception du couvercle, également en position d'utilisation, en coupe par un plan vertical repéré en II-II à la figure 1, constituant pour le dispositif un plan de symétrie et constituant un plan de symétrie de l'un des rails par rapport à l'autre.
- La figure 3 montre une vue du dispositif en coupe par un plan horizontal repéré en III-III à la figure 2.
- La figure 4 montre, en une vue analogue à celle de la figure 1, un détail agrandi de cette dernière, repéré en IV à la figure 1.

Naturellement, bien que le dispositif selon l'invention soit décrit plus particulièrement en référence à la soudure de rails de chemin de fer, disposés horizontalement, son application n'est pas limitée à la soudure de telles pièces et l'Homme du métier pourra apporter, aux dispositions qui vont être décrites, toute modification propre à adapter le dispositif à la soudure de pièces d'autres types et d'orientation éventuellement différente, sans pour autant sortir du cadre de la présente invention.

On a désigné respectivement par 1 et 2 deux rails de chemin de fer rectilignes, au moins approximativement horizontaux, placés dans le prolongement l'un de l'autre de telle sorte qu'ils présentent en commun un plan longitudinal de symétrie 3, au moins approximativement vertical, se confondant avec le plan de coupe repéré en I-I à la figure 2, et soient placés symétriquement l'un de l'autre par rapport à un autre plan 4 au moins approximativement vertical, coupant le plan 3 suivant un axe 5 lui même approximativement vertical ; les deux rails 1 et 2 présentent ainsi des faces d'extrémité respectives 6, 7 parallèles au plan 4 et situées en regard l'une de l'autre de telle sorte que subsiste entre elles un espace 8 destiné à être empli d'un métal d'apport, obtenu par réaction aluminothermique, pour souder entre eux, bout à bout, les deux rails 1 et 2.

A cet effet, comme il est connu en soi, l'espace 8 ainsi que des zones respectives des rails 1 et 2 immédiatement adjacentes aux faces d'extrémité 6 et 7 de ces derniers sont logés à l'intérieur d'une empreinte 9 d'un moule 10 qui, dans l'exemple illustré, est du type commercialisé par la Demanderesse sous la dénomination "moule préfabriqué à joint sec", largement diffusé et décrit par exemple dans le brevet français N° 2 396 620 ; ce moule est directement porté par les rails 1 et 2 et sert lui-même de support, conformément à la présente invention, à un creuset 11 de soudure aluminothermique quant à lui caractéristique de l'invention, en lui-même et quant à son mode de coopération avec le moule 10 dans une position d'utilisation qui servira de référence pour la suite de la description ; naturellement, on ne sortirait pas du cadre de la présente invention en utilisant un moule en lui-même original, et en lui associant un creuset convenablement adapté pour permettre notamment un support du creuset par le moule avec emboîtement mutuel, conformément à la présente invention.

Le moule 10 illustré étant bien connu, on rappellera simplement qu'il est formé de trois pièces principales, à savoir deux coquilles latérales 12 et 13 symétriques l'une de l'autre par rapport au plan 3 le long duquel elles sont mutuellement jointives, avec emboîtement mutuel (de façon non représentée), de façon à délimiter l'empreinte 9 respectivement de part et d'autre du plan 3 et vers le haut, et une plaque de fond ou sole 14 délimitant l'empreinte 9 vers le bas, les trois pièces 12, 13, 14 étant assemblées mutuellement, ainsi qu'avec les deux rails 1 et 2, par des moyens de serrage mutuel non représentés et étant étanchéifiées mutuellement, ainsi que vis-à-vis des rails 1 et 2, par des joints de feutre non représentés ainsi que par lutage.

Outre des moitiés respectives de l'empreinte 9, disposées symétriquement l'une de l'autre par rapport au plan 3 et suivant une symétrie respective par rapport au plan 4, les coquilles 12 et 13 délimitent vers le plan 3, au-dessus de l'empreinte 9, des moitiés respectives d'un godet de coulée 15 s'évasant vers le haut, lesquelles moitiés du godet de coulée 15 sont symétriques l'une de l'autre par rapport au plan 3 et respectivement symétriques par rapport au plan 4 ; préalablement à la réalisation de la soudure, avant mise en place du creuset 11 mais après mise en place du moule 10 sur les rails 1 et 2, le godet de coulée 15 reçoit un chalumeau de préchauffage de l'empreinte 9 et des zones des rails 1 et 2 adjacentes à leurs faces d'extrémité respectives 6 et 7, après quoi il reçoit intérieurement une pièce emboîtée 16, symétrique par rapport aux deux plans 3 et 4 et formant une chicane obligeant ultérieurement le métal en fusion résultant de la réaction aluminothermique à s'écouler non pas directement suivant l'axe 5 vers l'empreinte 9, dans laquelle le godet de coulée 15 débouche vers le bas, mais par des zones latérales du godet de coulée 15, c'est-à-dire en pratique par les zones de ce godet de coulée 15 les plus éloignées du plan 3 et comportant de préférence à cet effet des gorges respectives 17, 18 aménagées symétriquement l'une de l'autre par rapport au plan 3, respectivement dans la coquille 12 et dans la coquille 13, et respectivement symétriques par rapport au plan 4.

En outre, chaque coquille 12 et 13 délimite intérieurement, dans des zones plus éloignées du plan 3 que la moitié respectivement correspondante de l'empreinte 9 et du godet de coulée 15, une pipe respective 19, 20 de remontée d'air puis de métal au fur et à mesure du remplissage de l'empreinte 9 lors de la soudure aluminothermique, lesquelles pipes 19 et 20 débouchent respectivement vers le bas dans une zone inférieure de la moitié respective de l'empreinte 9, c'est-à-dire à proximité de la plaque de fond ou sole 14, et d'autre part débouchent vers le plan 3 dans une zone supérieure de la moitié respective de l'empreinte 9.

Comme il est également bien connu, les coquilles latérales 12 et 13, la plaque de fond ou sole 14 et la pièce formant chicane 16 sont réalisées en un materiau présentant à la fois une tenue suffisante à l'échauffement résultant de la soudure et une facilité de destruction après la soudure, comme par exemple un sable aggloméré au silicate et durci au gaz carbonique.

Vers le haut, les pipes 19 et 20 de même que les moitiés du godet de coulée 15 définies respectivement par la coquille latérale 12 et par la coquille latérale 13 débouchent dans des faces supérieures, planes respectives 21, 22 de celles-ci ; ces faces 21 et 22 sont symétriques l'une de l'autre par rapport au plan 3 et perpendiculaires l'une et l'autre au plan 4 alors qu'elles forment par rapport au plan 3 un dièdre d'angle voisin de 90° mais différent de 90° de telle sorte qu'elles convergent mutuellement suivant une arête rectiligne (non référencée) située dans le plan 3 et perpendiculaire au plan 4, c'est-à-dire également à l'axe 5 ; dans l'exemple illustré, les faces 21 et 22 convergent ainsi mutuellement vers le bas, en formant entre elles un dièdre d'angle α proche de 90° mais inférieur à 90°, pour constituer ensemble une face supérieure concave 23 du moule 10, mais des formes différentes de la face supérieure 23 du moule 10 pourraient également convenir à la mise en oeuvre de l'invention, dès lors qu'elles autoriseraient un emboîtement du creuset 11 sur le moule 10, la modification à cet effet des dispositions décrites dans la présente demande ressortant des attitudes normales d'un Homme du métier et ne sortant pas du cadre de la présente invention ; en particulier, au lieu de converger mutuellement vers le bas, les faces supérieures 21 et 22 des coquilles 12 et 13 du moule 10 pourraient converger mutuellement vers le haut en conservant leur planéité, leur perpendicularité vis-à-vis du plan 4 et leur symétrie mutuelle vis-à-vis du plan 3, pour donner à la face supérieure 23 du moule 10 une forme convexe, l'angle α étant alors supérieur à 180° tout en restant proche de 180°.

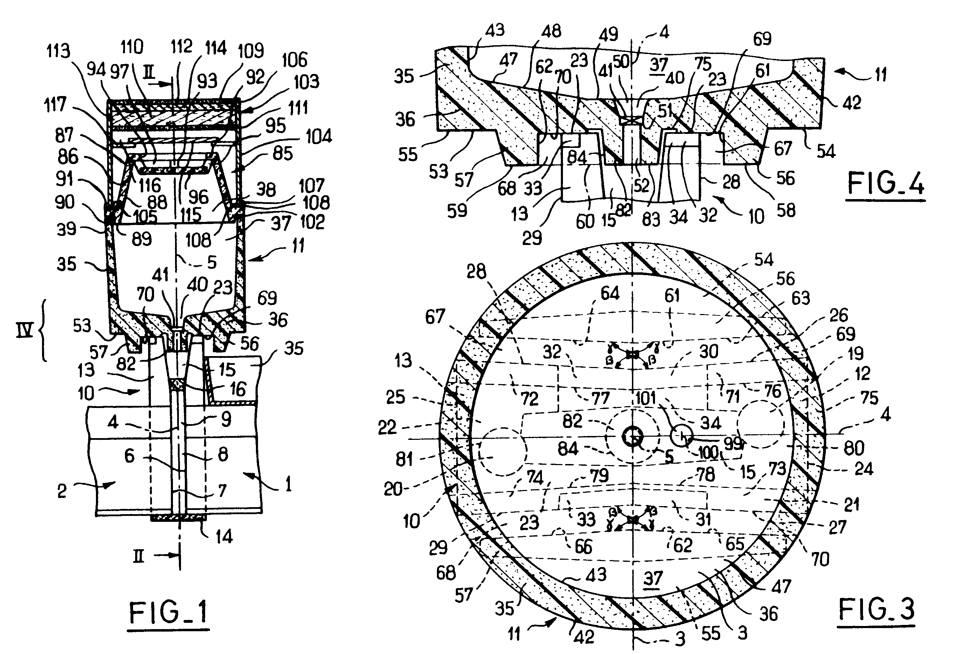

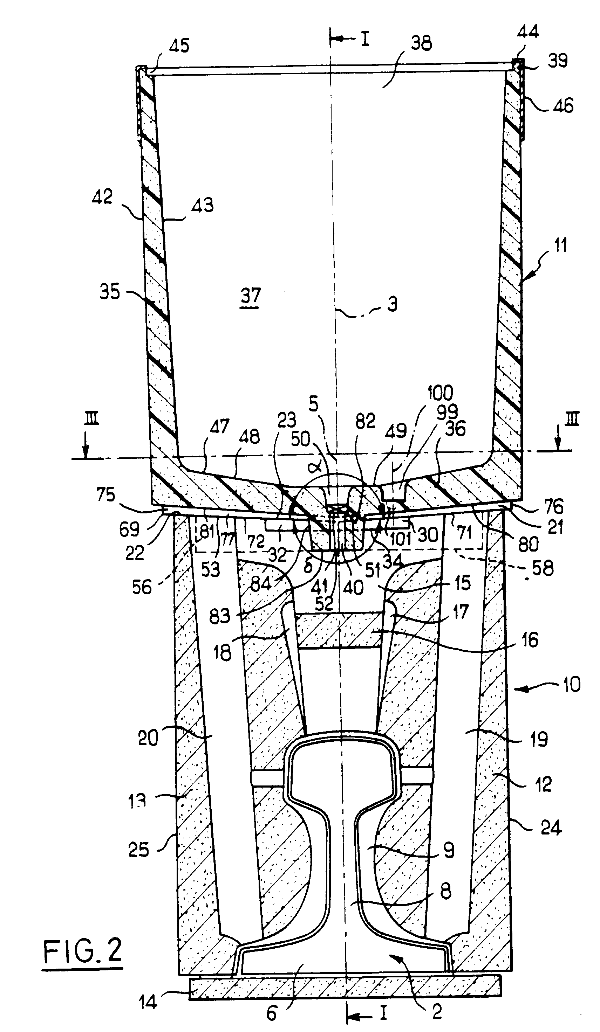

On remarquera que dans le moule connu, commercialisé par la Demanderesse, l'inclinaison des faces supérieures 21 et 22 des coquilles 12 et 13 du moule 10 apparaît déjà, mais comme simple conséquence des choix technologiques faits en vue de la fabrication de ces coquilles 12 et 13 par moulage ; il résulte également de ces choix que, si les deux coquilles 12 et 13 sont délimitées dans le sens d'un éloignement par rapport au plan 3 par des faces respectives 24, 25 planes, symétriques l'une de l'autre par rapport au plan 3 et parallèles à ce dernier, ces deux coquilles 12 et 13 sont par contre délimitées dans le sens d'un éloignement par rapport au plan 4 par des faces respectives planes qui, par contre, ne sont pas mutuellement parallèles et bien que mutuellement symétriques par rapport au plan 4, forment par rapport au plan 3 un angle β inférieur à 90° bien que proche de 90°, comme le montre la figure 3 où l'on a désigné respectivement par 26 et 27 les faces délimitant ainsi la coquille 12 dans le sens d'un éloignement par rapport au plan 4, et par 28 et 29 les faces délimitant ainsi la coquille 13 dans le sens d'un éloignement par rapport au plan 4 ; les faces 26 et 28 convergent mutuellement sur le plan 3 pour relier mutuellement les faces 24 et 25 d'un côté du plan 4 alors que les faces 27 et 29 convergent mutuellement sur le plan 3 pour relier mutuellement les faces 24 et 25 de l'autre côté du plan 4.

On remarquera que, sécantes vers le haut respectivement des faces 21 et 22 comme le sont également les faces 24 et 25, les faces 26 et 27 de la coquille 12 et les faces 28 et 29 de la coquille 14 présentent à leur intersection respectivement avec la face 21 et avec la face 22, dans une zone respective adjacente au plan 3, une encoche respective 30, 31, 32, 33 constituant un désépaississement localisé du matériau constitutif de la coquille 12, 13 et pouvant être de ce fait aisément agrandie, jusqu'au godet de coulée 15, lors de l'installation du moule 10 sur les rails à souder 1, 2, pour constituer un passage de corindon ; par exemple, les encoches 30, 32 correspondant aux faces 26 de la coquille 12 et 28 de la coquille 13, situées d'un même côté du plan 4, ont été agrandies par effritement du matériau constitutif des coquilles 12 et 13 jusqu'au godet de coulée 15 pour former ensemble un passage de corindon 34 menant du godet de coulée 15, à un niveau inférieur à celui de la face supérieure 23 du moule 10, jusqu'à l'extérieur de ce moule de façon équitablement répartie de part et d'autre du plan 3, de telle sorte que le corindon puisse s'écouler, en fin de remplissage de l'empreinte 9 et du godet de coulée 15 par le métal résultant de la réaction aluminothermique, jusqu'à un bac 35 de récupération de corindon posé sur le rail 1 (situé du même côté du plan 4 que les faces 26 et 28 des coquilles 12 et 13); naturellement, complémentairement ou en remplacement des encoches 30 et 32, les encoches 31 et 33 pourraient être ainsi agrandies jusqu'au godet de coulée 15 pour assurer le déversement du corindon vers un bac analogue au bac 35 mais posé sur le rail 2.

Toutes les dispositions qui viennent d'être décrites, à propos du moule 10, sont connues en elles-mêmes.

Le creuset 11 est quant à lui caractéristique de la présente invention.

De façon connue en soi, il présente une paroi périphérique 35 présentant une forme générale annulaire, de révolution autour de l'axe 3, et une paroi de fond 36 dont la forme générale est également de révolution autour de l'axe 5 mais qui est plate et orientée de façon générale transversalement par rapport à cet axe 5 ; les parois 35 et 36 délimitent ensemble, à l'intérieur du creuset 11, une chambre 37 de réaction aluminothermique, débouchant d'une part vers le haut par une ouverture supérieure 38 délimitée par un bord supérieur 39 de la paroi périphérique 35 et d'autre part vers le bas par un trou de coulée 40 aménagé dans la paroi de fond 36 et présentant une forme de révolution autour de l'axe 5, dont on remarquera qu'il est commun au godet de coulée 15 dans la position d'utilisation, illustrée, du creuset 11 et du moule 10.

Selon l'exemple, préféré, de réalisation du creuset 11 qui a été illustré, les deux parois 35 et 36 de ce creuset 11 sont réalisées en une seule pièce d'un matériau présentant à la fois une faible affinité pour l'humidité et une facilité de destruction après utilisation, tel que par exemple un sable aggloméré, lié au moyen d'une résine hydrophobe telle que de la bakélite et il est réalisé par un moulage au cours duquel on incorpore au creuset 11, à l'intérieur du trou de coulée 40, un obturateur thermofusible 41 se présentant sous la forme d'une rondelle orientée perpendiculairement à l'axe 3 et présentant une aptitude à fondre pour libérer le trou de coulée 40 lorsqu'une température prédéterminée est atteinte dans la chambre de réaction aluminothermique 37, d'une façon connue en elle-même.

A titre d'exemple, la paroi périphérique 35 est délimitée, respectivement dans le sens d'un éloignement et dans le sens d'un rapprochement par rapport à l'axe 5, par une face périphérique extérieure 42 cylindrique de révolution autour de cet axe et par une face périphérique intérieure 43 tronconique de révolution autour de cet axe et convergente de haut en bas, en formant par rapport à l'axe 5 un angle (non référencé) de l'ordre de quelques degrés seulement de telle sorte que la forme de la face périphérique intérieure 43 soit approximativement cylindrique ; vers le haut, au niveau du bord supérieur 39 du creuset 11, la face 42 se raccorde à une face annulaire plane 44, de révolution autour de l'axe 5, laquelle face 44 se raccorde elle-même à la face 43 par un décrochement annulaire 45, de révolution autour de l'axe 5 ; on remarquera qu'au niveau du bord supérieur 39 du creuset 11, la face périphérique 42 de celui-ci est munie d'une frette annulaire 46 renforçant la paroi 35 à ce niveau ; de façon particulièrement simple et économique, la frette 46 peut être constituée par un ruban d'un matériau polymère épousant étroitement la face périphérique 42 au niveau du bord supérieur 39 et solidarisée avec cette face périphérique 42 à ce niveau, par exemple par collage ou thermorétractation, ou par un ruban de papier épousant étroitement la face périphérique 42 et collé sur celle-ci au niveau du bord supérieur 42, ou encore par un ruban métallique enveloppant la face périphérique 42 à ce niveau et solidarisé avec elle par emboîtement serré ; de préférence, le ruban constituant la frette 46 est rabattu sur la face 44, comme il est illustré, et épouse également étroitement cette face 44 avec laquelle il peut être solidarisé ; naturellement, la frette 46 pourrait être remplacée par d'autres moyens de renforcement de la paroi périphérique 35 au niveau de son bord supérieur 39 et éventuellement à d'autre niveaux, par exemple par une armature annulaire, notamment métallique, noyée dans le matériau constitutif du creuset à proximité de son bord supérieur 39, autour de son ouverture supérieure 38 ou à tout autre niveau approprié, et pourrait être omise dans le cas d'un creuset 11 réalisé de façon suffisamment résistance pour être utilisé à plusieurs reprises, par exemple en métal doublé de matériau réfractaire.

La paroi de fond 36 présente quant à elle vers le haut une face supérieure 47 présentant d'une part une zone périphérique 48 se raccordant par un congé à la face périphérique intérieure 43 de la paroi périphérique 35 dans le sens d'un éloignement par rapport à l'axe 5, et une zone centrale 49 à laquelle la zone périphérique 48 raccorde ainsi la face périphérique 43 de la paroi périphérique 35 ; la zone périphérique 48 présente une forme tronconique de révolution autour de l'axe 5 et convergente vers le bas, et forme par rapport à l'axe 5 un angle (non référencé) proche de 90° ; la zone centrale 49 est quant à elle plane, annulaire de révolution autour de l'axe 5 auquel elle est perpendiculaire, et le trou de coulée 40 y débouche vers le haut suivant l'axe 5 par une face 50 en forme d'entonnoir de révolution autour de l'axe 5, et convergent vers le bas ; cette face 50 du trou de coulée 40 se raccorde vers le bas, par l'intermédiaire d'un épaulement annulaire 51 tourné vers le haut et recevant l'obturateur 41, à une face 52 du trou de coulée 40, quant à elle cylindrique de révolution autour de l'axe 5.

Vers le bas, la paroi de fond 36 est délimitée par une face inférieure 53 symétrique par rapport au plan 3 comme par rapport au plan 4 et qui, si elle converge vers le bas, présente quant à elle une forme qui, dans l'exemple illustre, est différente d'une forme de révolution autour de l'axe 5 et, conformement a la présente invention, est propre à permettre notamment un emboîtement du creuset 11 sur le moule 10.

Dans l'exemple illustré, la face inférieure 53 de la paroi de fond 36 présente ainsi successivement, dans le sens d'un rapprochement vis-à-vis du plan 3 :
- deux zones planes 54, 55 mutuellement coplanaires, perpendiculaires à l'axe 5 et symétriques l'une de l'autre par rapport au plan 3, ces deux zones 54 et 55 étant délimitées par jonction avec la face périphérique extérieure 42 de la paroi périphérique 35 du creuset 11 dans le sens d'un éloignement par rapport à l'axe 5 ;
- deux nervures 56, 57 symétriques l'une de l'autre par rapport au plan 4 et présentant des formes générales respectives en fuseau, allongées suivant des directions parallèles au plan 4 et perpendiculaires au plan 3, lorsque ces nervures sont vues dans un plan perpendiculaire à l'axe 5 ; ces nervures 56 et 57 se caractérisent d'une part par le fait qu'elles présentent vers le bas des faces planes respectives 58, 59 coplanaires, et plus précisément de même plan 60 décalé vers le bas par rapport aux zones 54, 55 pour servir de butée d'appui du creuset 11 au sol ou sur tout autre support, et par exemple dans un carton de transport, avant son positionnement au-dessus du moule 10 ; par ailleurs, ces nervures 56 et 57 présentent l'une vers l'autre, c'est-à-dire vers le plan 3, des faces respectives 61, 62 dont chacune est elle-même formée de deux facettes planes et parallèles à l'axe 5, respectivement 63, 64 et 65, 66, chacune de ces facettes 63, 64, 65, 66 de l'une des nervures 56, 57 étant symétrique de l'autre des facettes 63, 64, 65, 66 de cette même nervure 56 ou 57 par rapport au plan 3 sur lequel les deux facettes de chaque nervure 56, 57 convergent en formant par rapport à ce plan 3 un dièdre d'angle γ proche de 90° et supérieur à 90°, et en pratique sensiblement complémentaire de l'angle β; en outre, les facettes 63, 64, 65, 66 étant placée du même côté des plans 3 et 4 que les faces 26, 28, 27, 29 des coquilles 12 et 13 du moule 10 respectivement, dans la position d'utilisation illustrée aux figures, les facettes 63 et 65 sont mutuellement espacées, perpendiculairement au plan 4, d'une distance moyenne supérieure à la distance moyenne séparant perpendiculairement à ce plan les faces 26 et 27 de la coquille 12 et les facettes 64 et 66 sont mutuellement espacées perpendiculairement au plan 4 d'une distance moyenne supérieure à la distance moyenne séparant perpendiculairement à ce plan les faces 28 et 29 de la coquille 13 si bien que les facettes 63, 64, 65, 66 sont placées respectivement en regard des faces 26, 28, 27, 29 en respectant toutefois vis-à-vis de ces faces un jeu tel que les nervures 56 et 57 ne puisse constituer un obstacle à l'écoulement du corindon par celles des encoches 30, 31, 32, 33 qui ont été dégagées à titre de passage de corindon 34 ; ce jeu a été désigné par la référence 67 en ce qui concerne la paire de facettes 63, 64 et la paire de faces 26, 28, où débouche précisement le passage 34 dans l'exemple illustré, et par la référence 68 en ce qui concerne la paire de facettes 65, 66 et la paire de faces 27, 29 ;
- deux bandes 69, 70, mutuellement symétriques par rapport au plan 3 et respectivement symétriques par rapport au plan 4 ; ces bandes 69 et 70 sont en outre allongées perpendiculairement au plan 3 et sont destinées à venir épouser la face supérieure 23 du moule 10 dans des zones de cette face supérieure 23 situées respectivement entre le godet de coulée 15 et le couple de faces 26, 28 et entre le godet de coulée 15 et le couple de faces 27, 29 ; à cet effet, la bande 69 est formée de deux facettes 71, 72 planes, tournées vers le bas et convergeant mutuellement le long d'une arête (non référencée) située dans le plan 3 et perpendiculaire au plan 4 ainsi qu'à l'axe 5, en formant entre elles un dièdre d'angle δ complémentaire du dièdre d'angle α de la face supérieure 23 du moule 10 de telle sorte que, dans la position d'utilisation, les facettes 71 et 72 de la bande 69 s'appuient à plat respectivement sur la face supérieure 21 de la coquille 12 et sur la face supérieure 22 de la coquille 13, en aidant ainsi l'utilisateur à disposer le creuset 11 symétriquement par rapport au plan longitudinal 3 supposé lié aux rails 1 et 2 ainsi qu'au moule 10 lors de la mise en place du creuset 11 sur ce dernier ; dans une zone chevauchant le plan 3, la bande 69 délimite le passage de corindon 34 vers le haut ; naturellement, dans le cas de formes de la face supérieure 23 du moule 10 différentes de la forme concave décrite, la bande 69 pourrait présenter toute forme complémentaire, propre à assurer le positionnement du creuset 11 par rapport au moule 10 ; notamment, dans le cas d'une face supérieure 23 convexe, la bande 69 présenterait une forme concave au lieu de la forme convexe décrite et illustrée ; de même, pour épouser localement respectivement la face supérieure 21 de la coquille 12 et la face supérieure 22 de la coquille 13, la bande 70 présente une facette 73 plane, coplanaire avec la face 71 suivant un même plan perpendiculaire au plan 4 et une facette 74 coplanaire avec la face 72 suivant un même plan perpendiculaire au plan 4 de telle sorte que les facettes 73 et 74 occupent la même position relative que les facettes 71 et 72 et, notamment, convergent sur le prolongement de l'arête sur laquelle convergent les facettes 71 et 72 en formant un dièdre de même angle δ , complémentaire de l'angle α ; on remarquera que les deux bandes 69 et 70 sont situées en retrait, vers le haut, par rapport au plan commun 60 des nervures 56 et 57, pour permettre à ces dernières de longer latéralement le moule 10 dans la position d'utilisation illustrée, et de faciliter l'accès à cette position lorsque l'utilisateur descend le creuset 11 sur le moule 10 pour le poser sur la face supérieure 23 de ce dernier par les deux bandes 69 et 70 de la face inférieure 53 ;
- une gorge 75 à usage de passage d'évent, chevauchant les plans 3 et 4 et disposée symétriquement par rapport à l'un comme par rapport à l'autre, laquelle gorge 75 est aménagée, en creux relatif, entre les deux bandes 69 et 70 de la face inférieure 55 du creuset 11 ; dans l'exemple illustré, la gorge 75 est délimitée d'une part par des faces de flanc 76, 77, 78, 79 planes, situées du même côté des plans 3 et 4 que les facettes 63, 64, 65, 66 respectivement et parallèles à ces facettes respectivement, et d'autre part par deux faces de fond 80, 81 planes, perpendiculaires au plan 4 et disposées symétriquement l'une de l'autre par rapport au plan 3, respectivement de part et d'autre de celui-ci ; ainsi, chacune de ces faces de fond 80, 81 présente une zone voisine du plan 3, dans laquelle elle est placée en regard du godet de coulée 15 notamment, une zone relativement plus éloignée du plan 3, dans laquelle elle est placée en regard respectivement de la pipe 19 et de la pipe 20, et enfin une zone encore plus éloignée du plan 3 et se raccordant à la face périphérique extérieure 42 de la paroi périphérique 35, zone dans laquelle elle est placée en regard de la zone de la face 21 située entre la pipe 19 et la face 24 ou la zone de la face 22 située entre la pipe 20 et la face 25, respectivement, pour délimiter ainsi le passage d'évent et guider du godet de coulée 15 et des pipes 19 et 20 vers l'extérieur du moule 10 et du creuset 11 l'air chassé hors du moule 10 lors de la coulée de métal en fusion dans l'empreinte 9 de celui-ci ; de préférence, en vue d'un maximum d'efficacité à cet effet, la gorge 75 présente une section croissant dans le sens d'un éloignement par rapport au plan 3, c'est-à-dire par rapport au godet de coulée 15, vers l'extérieur du moule 10 et du creuset 11 ; à cet effet, dans l'exemple illustré, les faces 80 et 81 divergent, dans le sens d'un éloignement par rapport au plan 3, respectivement par rapport aux facettes coplanaires 71 et 73 et par rapport aux facettes coplanaires 72 et 74 ;
- une couronne 82 entourant le trou de coulée 40, et plus précisément la face cylindrique 52 de celui-ci, et formant une saillie vers le bas, suivant l'axe 5, par rapport aux faces de fond 80 et 81 de la gorge 75, de même que par rapport aux bandes 69 et 70 de la face inférieure 55 du creuset 11, pour présenter une face d'extrémité 83 annulaire, plane, de révolution autour de l'axe 5 auquel elle est perpendiculaire, dans une position coplanaire avec les faces 58 et 59 des nervures 56 et 57 ou encore en retrait par rapport au plan commun 60 de ces faces 58 et 59, de telle sorte que la couronne 82 soit elle-même située intégralement en retrait vers le haut par rapport à ce plan et que la couronne 82 soit protégée lorsqu'on dépose le creuset 11 sur un support quelconque par les nervures 56 et 57 ; dans le sens d'un éloignement par rapport à l'axe 5, la couronne 82 est délimitée par une face 84 qui présente une forme tronconique de révolution autour de l'axe 5 et converge vers le bas, vers la face 83 ; ainsi, dans la position d'utilisation illustrée aux figures, la couronne 82 est emboîtée coaxialement à l'intérieur du godet de coulée 15 et, lorsqu'on descend le creuset 11 sur le moule 10 pour l'amener dans cette position d'utilisation, sert de guide vers la coaxialité du trou de coulée 40 et du godet de coulée 15 en cas de léger désaxement relatif initial ; à cet effet, si l'on se réfère à la position d'utilisation, et à chaque niveau en référence à l'axe 5, la face 84 présente un diamètre voisin de la plus petite dimension que le godet de coulée 15, lui-même convergent vers le bas à partir de la face supérieure 23 du moule 10 au moins dans ses zones supérieures, présente au même niveau, en pratique perpendiculairement au plan 4, mais ce diamètre et ces dimensions sont néanmoins voisines.

Ainsi, non seulement le creuset 11 peut être amené très facilement dans sa position d'utilisation par rapport au moule 10, mais il est en outre retenu par emboîtement sur celui-ci, de façon sûre, à un point tel qu'il n'est plus nécessaire de prévoir de support particulier pour le creuset 11, autre que le moule 10 lui-même.

De préférence, pour éviter qu'une exposition anormalement longue du creuset à la température de la réaction aluminothermique, notamment en raison d'un disfonctionnement de l'obturateur thermofusible 41, se traduise par une rupture incontrôlée du creuset 11 par destruction de la résine hydrophobe utilisée comme liant, au risque de provoquer un accident par écoulement du métal et du corindon en fusion au sol, la paroi de fond 36 présente à proximité du trou de coulée 40, dans une zone 101 située à l'aplomb du godet de coulée 15 en position d'utilisation, un désépaississement sous forme d'un trou borgne 99 aménagé suivant un axe 100 orienté parallèlement à l'axe 5 et situé, dans le plans 4, à une distance de cet axe 5 telle qu'il passe dans le godet de coulée 15 en position d'utilisation. Dans l'exemple illustré, ce trou borgne 99 débouche vers le haut dans la zone périphérique 48 de la face supérieure 47de la paroi de fond 36, à proximité immédiate de la zone centrale 49, mais on pourrait également choisir de la faire déboucher vers le bas dans la face inférieure 53 de la paroi de fond 36, et plus précisément dans l'une des faces 80, 81, naturellement plus loin de l'axe 5 que la couronne 82. Le trou borgne 59 laisse ainsi subsister dans la zone 101 une épaisseur de la paroi de fond 36 inférieure à l'épaisseur que cette paroi de fond 36 présente par ailleurs, ainsi qu'à l'épaisseur de la paroi périphérique 35 du creuset 11 si bien qu'en cas d'exposition anormalement prolongée du creuset 11 à la température de la réaction aluminothermique, cette zone 101 se détruit en priorité, pour laisser le métal et le corindon en fusion s'écouler vers le godet de coulée 13 et vers l'empreinte 9 du moule 11, sans risque pour l'utilisateur. Naturellement, la destruction de la zone 101 ne doit survenir que si la coulée n'a pu s'effectuer normalement par le trou de coulée 40 et, à cet effet, on calibre le désépaississement localisé résultant de la présence du trou borgne 99 de telle sorte que la zone 101 ne cède que lorsqu'elle atteint une température supérieure à la température de fusion de l'obturateur thermofusible 41 dans des conditions normales de fonctionnement de celui-ci.

Avantageusement, comme il est illustré à la figure 1, au creuset 11 est associé un couvercle 85, simplement posé et emboîté sur le bord supérieur 39 et destiné à fermer l'ouverture supérieure 38 de la chambre 37 pour éviter les projections hors de celle-ci lors de la réaction aluminothermique, tout en autorisant la sortie des gaz chauds résultant de cette réaction ; la chambre 37 présente en effet un volume tel que l'on puisse se dispenser de réhausse pour y faire tenir la charge aluminothermique avant la réaction aluminothermique, notamment du fait d'un dimensionnement suffisant, à cet effet, de la paroi péripherique 35 parallèlement à l'axe 5.

Le couvercle 85 est visible à la figure 1, dans une position dans laquelle il ferme la chambre de réaction 37 vers le haut, et qui est la position qu'il occupe pendant la réaction aluminothermique ; il sera décrit en référence à cette position.

Ce couvercle 85 présente une forme générale de révolution autour de l'axe 5 et comporte notamment une paroi périphérique 86 délimitée, respectivement dans le sens d'un éloignement par rapport à cet axe 5 et dans le sens d'un rapprochement par rapport à cet axe, par des faces périphériques respectivement extérieure 87 et intérieure 88 tronconiques de révolution autour de l'axe 5, lesquelles faces convergent vers le haut en formant un même angle (non référencé) avec l'axe 5 ; vers le bas, la face périphérique intérieure 88 se raccorde à une face annulaire plane 89, de révolution autour de l'axe 5 auquel elle est perpendiculaire, laquelle face 89 se raccorde par une gorge 90 annulaire, de révolution autour de l'axe 5, à un rebord annulaire 91, lui-même de révolution autour de l'axe 5, délimitant la face périphérique extérieure 87 vers le bas et formant par rapport à cette face 87 une saillie dans le sens d'un éloignement par rapport à l'axe 5 ; les dimensions de la face 89, de la gorge annulaire 90 et du rebord annulaire 91 sont telles que, par la gorge 90, le couvercle 85 s'emboîte à l'intérieur de l'ouverture supérieure 38 de la chambre annulaire 37 du creuset 11, avec un jeu minime, et repose à plat sur la face 44 de ce bord supérieur 39 par son rebord 91.

La paroi 86, comme les parois 35 et 36 du creuset 11, est continue si bien que, notamment, les parois respectives 35 du creuset 11 et 86 du couvercle 85, raccordées mutuellement par le rebord 91, empêchent toute projection hors de la chambre 37 pendant la réaction aluminothermique.

Toutefois, vers le haut, à une distance du rebord 91, mesurée parallèlement à l'axe 5, inférieure à la profondeur de la chambre 37 mesurée parallèlement à l'axe 5 à partir de la face 44 de la paroi 35 du creuset 11, la paroi 86 présente un rebord annulaire 92 auquel les faces 87 et 88 se raccordent vers le haut ; ce rebord 92, annulaire de révolution autour de l'axe 5, est tourné vers ce dernier et délimite, par une face 94 cylindrique de révolution autour de l'axe 5, une ouverture supérieure 93 du couvercle 85.

Directement en regard de cette ouverture 85, en dépression vers le bas par rapport au rebord 92, la paroi périphérique 86 porte de façon solidaire, par l'intermédiaire de nervures 95 étroitement localisées, par exemple au nombre de quatre diamétralement opposées deux à deux en référence à l'axe 5 et situées dans les plans 3 et 4, une paroi de fond 96 plate, continue, en forme de disque de révolution autour de l'axe 5, laquelle délimite avec le rebord 92 une lumière annulaire 97, de révolution autour de l'axe 5, à usage d'évent ; la probabilité pour que des projections vers l'extérieur aient lieu par la lumière 97 ainsi disposée est faible ; en outre, dans l'hypothèse où de telles projections se produiraient, elles se produiraient vers l'axe 5 avec peu de risques de se répandre vers l'extérieur dans le sens d'un éloignement par rapport à celui-ci, c'est-à-dire d'atteindre les utilisateurs du dispositif selon l'invention.

Lorsque le creuset 11 est réalisé dans un matériau le destinant à un usage unique, le couvercle 85 est de préférence réalisé également dans un tel matériau, par exemple un sable aggloméré, lié au moyen d'une résine hydrophobe telle qu'une bakélite ; ses dimensions parallèlement à l'axe 5, sa forme et le rabattement de la frette 46 sur la face 44 de la paroi périphérique 35 du creuset 11 permettent alors de stocker et de transporter sans risque d'endommagement le couvercle 85 à l'état retourné, sa paroi périphérique 86 étant logée dans la chambre de réaction 37 du creuset 11 et son rebord 91 reposant à l'envers sur la face supérieure 44 de la paroi périphérique 35 de ce creuset.

On remarquera que, dans la position qu'il occupe pendant la réaction aluminothermique, le couvercle 85 repose de façon sensiblement continue, par son rebord annulaire 91, sur la face 44 du bord supérieur 39 du creuset 11, ce qui permet de les étanchéifier mutuellement au moyen d'un joint, tel qu'un cordon 102 de pâte à luter, interposé entre le rebord annulaire 91 et la face 44 ; on remarquera que le rabattement de la frette 46 sur cette face 44, selon le mode de réalisation décrit et illustré, permet de faire contribuer la frette 46 à cette étanchéification dès lors que la frette 46 est réalisée en un matériau susceptible de résister suffisamment longtemps à la température de la réaction aluminothermique. De ce fait, les fumées et projections de particules générées par la réaction aluminothermique ne peuvent sortir de la chambre de réaction 37 du creuset 11 que par la lumière d'évent 97, pratiquement sans risque d'atteindre les utilisateurs en raison de la conformation de cette dernière ; en outre, on peut alors assurer si nécessaire une filtration efficace de ces fumées et projections de particules en couvrant la lumière d'évent 97 d'une coiffe filtrante 103 étanchéifiée vis-à-vis du couvercle 85.

Un exemple de réalisation d'une telle coiffe filtrante 103 a été illustrée à la figure 1, sous une forme comportant une paroi périphérique étanche 104, tubulaire, de révolution autour de l'axe 5 si l'on se réfère à la position dans laquelle la coiffe filtrante 103 est illustrée à la figure 1 et qui constitue sa position d'utilisation pendant la réaction aluminothermique, cette paroi périphérique 104 présentant respectivement vers le bas et vers le haut des bords 105, 106 plans, annulaires de révolution autour de l'axe 5 auquel ils sont perpendiculaires.

Par son bord 105, la paroi périphérique 104 porte de façon solidaire un rebord annulaire 107, de révolution autour de l'axe 5 et tourné dans le sens d'un éloignement par rapport à celui-ci, et ce rebord annulaire 107 présente une conformation telle qu'il repose à plat, de façon sensiblement continue, sur le rebord annulaire 91 du couvercle 85 par l'intermédiaire d'un joint tel qu'un cordon 108 de pâte à luter étanchéifiant ainsi la paroi périphérique 104 vis-à-vis du rebord annulaire 91 du couvercle 85 ; on pourrait également prévoir, à cet effet, d'intégrer un joint durable, en matériau réfractaire, au rebord annulaire 107 de la coiffe filtrante 103, de façon non représentée mais aisément concevable par un Homme du métier.

Par son bord 106, la paroi périphérique 104 délimite un orifice 109 de sortie des fumées filtrées, au-dessus du rebord 92 du couvercle 85 et de la lumière d'évent 97 de celui-ci.

A l'intérieur de cet orifice 109, à proximité immédiate du bord 105, c'est-à-dire également au-dessus du rebord 92 du couvercle 85 et de la lumière d'évent 97 de celui-ci, la paroi périphérique 104 porte de façon solidaire une rondelle filtrante 110 orientée perpendiculairement à l'axe 5 et raccordée de toutes parts à la paroi périphérique 104 dans le sens d'un éloignement par rapport à cet axe 5.

Dans l'exemple illustré, la rondelle filtrante 110 est formée de deux couches filtrantes superposées mutuellement, entre deux grilles plates de retenue 111, 112 orientées perpendiculairement à l'axe 5 et solidarisées périphériquement avec la paroi périphérique 104, à savoir :
- une couche inférieure 113, comparativement plus proche de la lumière d'évent 97 et propre à retenir les particules les plus grosses entraînées par les fumées, ainsi qu'à protéger thermiquement l'autre couche ou couche supérieure 114,
- la couche supérieure 114, apte à retenir les particules les plus fines entraînées par les fumées.

En outre, la couche inférieure 113 est protégée des projections de particules par un deflecteur 115, par exemple en tôle, que la paroi périphérique 104 porte intérieurement, de façon solidaire, entre la rondelle filtrante 110 et le record du couvercle 85 et à distance de l'un comme de l'autre. Dans l'exemple illustré, ce déflecteur 115 présente la forme d'un disque plat, de révolution autour de l'axe 5 auquel il est perpendiculaire, et présentant un diametre intermédiaire entre le diamètre de la face 94 du rebord 92 du couvercle 85 et le diamètre intérieur de la paroi périphérique 104 de façon à laisser subsister à proximité immédiate de celle-ci une couronne 116 de passage pour les fumées vers la rondelle filtrante 110 ; le détecteur 115 est solidarisé avec la paroi périphérique 104 par l'intermédiaire de potences 117 traversant la couronne de passage 116 radialement en référence à l'axe 5.

A titre d'exemple, on a obtenu de bons résultats aux essais en utilisant pour la couche inférieure 113 de la paille de fer, sur une épaisseur à environ 40 mm, et pour la couche supérieure 114 un feutre réfractaire à base de fibres de silice (50,5% environ) et d'alumine (44% environ) d'un type commercialisé par la firme KERLANE sous l'appellation PYRONAP 50, d'une masse volumique apparente de l'ordre de 210 kg/m³ et d'une épaisseur inférieure ou égale à celle de la paille de fer selon les pertes de charge imposées aux fumées entre la chambre de réaction 37 et cette couche supérieure 114, étant entendu que d'autres matériaux peuvent être choisis sans que l'on sorte pour autant du cadre de la présente invention ; en particulier, on pourrait utiliser une rondelle filtrante 110 à couche filtrante unique ou à plus de deux couches.

On remarquera qu'en conservant la rondelle filtrante 110, dans l'une ou l'autre de ses variantes, ou en la remplaçant par une paroi étanche disposée identiquement, le déflecteur 115 étant alors supprimé, on pourrait également concevoir la paroi périphérique 104 de telle sorte qu'elle assure la filtration des fumées et projections de particules, par exemple sous une forme comportant une ou plusieurs couches tubulaires filtrantes entre deux grilles tubulaires.

De tels modes de réalisation de la coiffe filtrante 103 destinent plus particulièrement celle-ci à être utilisée plusieurs fois ; on ne sortirait pas du cadre de la présente invention en concevant une telle coiffe en vue d'un usage unique, auquel cas on pourrait par exemple la réaliser intégralement en un matériau poreux et réfractaire, par exemple un feutre à base de fibres de silice et d'alumine convenablement mis en forme, ou même en l'intégrant directement au couvercle.

On ne sortirait pas non plus du cadre de la présente invention en donnant à la coiffe filtrante 103 une forme différente de la forme qui a été décrite et en l'appuyant sur le couvercle 85, avec étanchéification mutuelle, d'une façon différente de la façon décrite, que le couvercle 85 conserve la forme décrite ou présente une forme différente ; ainsi, par exemple, en conservant au couvercle 85 la forme décrite, on pourrait prévoir de réduire les dimensions de la coiffe filtrante perpendiculairement à l'axe 5, en lui conservant par ailleurs la forme décrite, mais en donnant à son rebord annulaire 107 une conicité complémentaire de celle de la face périphérique extérieure 87 de la paroi périphérique 86 du couvercle 85 de telle sorte que la coiffe filtrante puisse s'appuyer sur cette face périphérique extérieure 87 par ce rebord annulaire 107, dans une relation d'emmanchement conique favorisant l'étanchéification mutuelle ; un tel mode de réalisation n'a pas été illustré mais se déduit aisément du mode de réalisation décrit et illustré.

Naturellement, le mode de mise en oeuvre de l'invention qui a été décrit ne constitue qu'un exemple; en particulier, la Demanderesse a cherché à communiquer à la face inférieure 53 du creuset 11 une forme telle que celui-ci s'emboîte sur des moules qu'elle fabrique et commercialise couramment, et que l'on associe habituellement à des creusets durables portés par un support indépendant du moule 10 ; naturellement, on ne sortirait pas du cadre de la présente invention en conformant la face inférieure 53 de la paroi de fond 36 du creuset 11 de telle sorte que ce dernier s'emboîte, conformément à la présente invention, sur des moules d'autres fabrications, pour être supporté directement par ces derniers, ou encore en réalisant les moules 10 conformés différemment des moules connus et en conformant des creusets de façon propre à permettre leur emboîtement sur ces moules conformément à la présente invention.

## Revendications

1. Dispositif de soudure aluminothermique, destiné à l'aboutement de deux pièces métalliques (1, 2) telles que des rails de chemin de fer, situées en regard l'une de l'autre de telle sorte que subsiste entre elles un espace (8), et comportant :
- un creuset (11) délimitant une chambre (37) de réaction aluminothermique et destiné à être utilisé dans une orientation déterminée de creuset dans laquelle le creuset (11) présente en partie inférieure un trou de coulée (40) débouchant vers le haut dans ladite chambre et vers le bas dans une face inférieure (53), extérieure, du creuset (11) suivant un axe vertical déterminé (5) du creuset (11),
- un moule (10) propre à s'emboîter localement sur les deux pièces métalliques (1, 2) en délimitant autour d'elles une empreinte de moulage (9) dans une orientation déterminée du moule dans laquelle le moule (10) présente en partie supérieure un godet de coulée (15) débouchant vers le bas dans ladite empreinte (9) et vers le haut dans une face supérieure (23), extérieure, du moule (10) suivant un axe vertical déterminé (5) du moule (10),
lesdites faces respectivement inférieure (53) du creuset (11) et supérieure (23) du moule (10) présentant des creux et/ou reliefs respectifs (15, 21, 22, 56, 57, 71, 72, 73, 74, 82) mutuellement complémentaires, tels qu'ils définissent dans la face inférieure (53) du creuset (11) au moins une zone plane (71, 72, 73, 74) approximativement perpendiculaire à l'axe (5) du creuset (11) et dans la face supérieure (23) du moule (10) au moins une zone plane (21, 22) approximativement perpendiculaire à l'axe (5) du moule (10) et autorisent le dépôt du creuset (11) sur le moule (10), avec emboîtement mutuel, dans une position d'utilisation dans laquelle le creuset (11) et le moule (10) occupent lesdites orientations respectivement de creuset et de moule, le trou de coulée (40) et le godet de coulée (15) sont coaxiaux, et lesdites zones planes (21, 22, 71, 72, 73, 74) respectives de la face inférieure (53) du creuset (11) et de la face supérieure (23) du moule (10) se font face mutuellement,
caractérisé en ce que le moule (10) est constitué par un moule (10) à usage unique, réalisé en un matériau facilitant sa destructionaprès la soudure, qui constitue la face supérieure (23) du moule (10) et délimite intérieurement le godet de coulée (15) et l'empreinte de moulage (9), propre à loger ledit espace (8) ainsi que des zones respectives des pièces métalliques (1, 2) immédiatement adjacentes à celui-ci de telle sorte que, pour réaliser la soudure, un métal d'apport obtenu par réaction aluminothermique dans le creuset (11) et remplissant l'empreinte de moulage (9) par l'intermédiaire du trou de coulée (10) et du godet de coulée (15) emplisse ledit espace (8), et en ce que lesdits creux et/ou reliefs (15, 21, 22, 56, 57, 71, 72, 73, 74, 82) sont agencés de telle sorte que, dans ladite position d'utilisation, le creuset (11) repose sur le moule (10) par lesdites zones planes respectives (21, 22, 71, 72, 73, 74), en appui mutuel à plat.

2. Dispositif selon la revendication 1, caractérisé en ce que lesdites faces respectivement inférieure (53) du creuset (11) et supérieure (23) du moule (10) présentent deux zones respectives planes (21, 22, 71, 72, 73, 74) qui sont orientées approximativement perpendiculairement respectivement à l'axe (5) du creuset (11) et à l'axe (5) du moule (10) et qui convergent mutuellement en formant entre elles un dièdre d'angle ( α,δ ) proche de 180°, les dièdres formés respectivement par lesdites zones planes (71, 72, 73, 74) de la face inférieure (53) du creuset (11) et par lesdites zones planes (21, 22) de la face supérieure (23) du moule (10) étant mutuellement complémentaires de telle sorte que chacune desdites zones planes (71, 72, 73, 74) de la face inférieure (53) du creuset (11) soit en appui à plat sur une zone plane respectivement correspondante (21, 22) de la face supérieure (23) du moule (10) dans ladite position d'utilisation.

3. Dispositif selon la revendication 2, caractérisé en ce que lesdites zones planes (71, 72, 73, 74) de la face inférieure (53) du creuset (11) convergent sur l'axe (5) du creuset (11) et en ce que lesdites zones planes (21, 22) de la face supérieure (23) du moule (10) convergent sur l'axe (5) du moule (10).

4. Dispositif selon l'une quelconque des revendications 2 et 3, caractérise en ce que lesdites zones planes (21, 22, 71, 72, 73, 74), respectivement de la face inférieure (53) du creuset (11) et de la face supérieure (23) du moule (10), convergent vers le bas dans ladite position d'utilisation.

5. Dispositif selon l'une quelconque des revendications 1 à 4, caractérisé en ce que lesdites faces respectivement inférieure (53) du creuset (11) et supérieure (23) du moule (10) présentent des formes telles qu'elles dégagent entre le creuset et le moule au moins un passage d'évent (75, 76), reliant le godet de coulée (15) à l'extérieur du creuset (11) et du moule (10) dans ladite position d'utilisation.

6. Dispositif selon la revendication 5, caractérisé en ce que ledit passage d'évent (75, 76) présente une section croissante dans un sens allant du godet de coulée (15) vers l'extérieur du creuset (11) et du moule (10).

7. Dispositif selon l'une quelconque des revendications 5 et 6, caractérisé en ce que ladite zone plane, au nombre d'au moins une, (71, 72, 73, 74) de la face inférieure (53) du creuset (11) comporte une gorge (75, 76) délimitant ledit passage d'évent avec la zone plane respectivement correspondante (21, 22) de la face supérieure (23) du creuset (10) dans ladite position d'utilisation.

8. Dispositif selon l'une quelconque des revendications 1 à 7, caractérise en ce que lesdites faces respectivement inférieure (53) du creuset (11) et supérieure (23) du moule (10) présentent des formes telles qu'elles dégagent entre le creuset (11) et le moule (10) au moins un passage de corindon (34), reliant le godet de coulée (15) à l'extérieur du creuset (11) et du moule (10) dans ladite position d'utilisation.

9. Dispositif selon la revendication 8, caractérisé en ce que ladite zone plane, au nombre d'au moins une, (21, 22) de la face supérieure (23) du moule (10) comporte une encoche (30, 32, 34) délimitant ledit passage de corindon (34) avec la zone plane (71, 72) respectivement correspondante de la face inférieure (53) du creuset (11) dans ladite position d'utilisation.

10. Dispositif selon l'une quelconque des revendications 1 à 9, caractérise en ce que la face inférieure (53) du creuset (11) présente autour du trou de coulée (40) une couronne annulaire (82) en saillie suivant ledit axe (5) du creuset et propre à s'emboîter, avec jeu, dans le godet de coulée (15) dans ladite position d'utilisation.

11. Dispositif selon l'une quelconque des revendications 1 à 10, caractérise en ce que la face inférieure (53) du creuset (11) présente, respectivement de part et d'autre du trou de coulée (40), des butées (56, 57) en saillie disposées de telle sorte qu'elles longent le moule (10), respectivement de part et d'autre de ladite face supérieure (23) de celui-ci, dans ladite position d'utilisation.

12. Dispositif selon la revendication 11, caractérisé en ce que lesdites butées (56, 57) présentent des extrémités libres respectives (58, 59) coplanaires suivant un plan (60) perpendiculaire à l'axe (5) du creuset (11).

13. Dispositif selon la revendication 12 en combinaison avec la revendication 10, caractérisé en ce que ladite couronne (82) est placée en retrait par rapport audit plan (60).

14. Dispositif selon l'une quelconque des revendications 1 à 13, caractérisé en ce que le creuset (11) comporte, à l'intérieur du trou de coulée (40), des moyens (51) de réception d'un obturateur thermofusible (41).

15. Dispositif selon l'une quelconque des revendications 1 à 13, caractérisé en ce que le creuset (11) comporte un obturateur thermofusible (41) à l'intérieur du trou de coulée (40).

16. Dispositif selon l'une quelconque des revendications 1 à 15, caracterisé en ce que le creuset (11) est à usage unique, réalisé en un matériau facilitant sa destruction après utilisation, notamment en sable agglomére au moyen d'une résin hydrophobe.

17. Dispositif selon la revendication 16, caractérisé en ce que le creuset (11) présente vers le haut, dans ladite orientation de creuset, un bord supérieur (39) délimitant une ouverture supérieure (38) de ladite chambre (37) et en ce qu'il porte extérieurement une frette annulaire (46) autour dudit bord supérieur (39).

18. Dispositif selon la revendication 17, caractérisé en ce que ladite frette annulaire (46) est un ruban épousant étroitement ledit bord (39) et solidarisé avec lui.

19. Dispositif selon l'une quelconque des revendications 16 à 18, caractérisé en ce que le creuset comporte une armature annulaire noyée.

20. Dispositif selon l'une quelconque des revendications 16 à 19, caractérisé en ce que le creuset (11) présente un désépaississement localisé à l'aplomb du godet de coulée (15) dans ladite position d'utilisation.

21. Dispositif selon la revendication 20, caractérisé en ce que le creuset (11) présente à proximité du trou de coulée (40) un trou borgne (99) aménagé suivant un axe (100) parallèle à l'axe (5) du creuset (11) et passant à l'intérieur du godet de coulée (15) dans ladite position d'utilisation.

22. Dispositif selon l'une quelconque des revendications 1 à 21, caractérisé en ce que le creuset (11) présente vers le haut, dans ladite orientation de creuset, un bord supérieur (39) délimitant une ouverture supérieure (38) de ladite chambre (37) et en ce qu'il porte par ledit bord (39) un couvercle rapporté (85) de fermeture de ladite chambre (37), muni de moyens d'évents (97).

23. Dispositif selon la revendication 22, caractérisé en ce que le couvercle (85) présente suivant l'axe (5) du creuset (11) une zone en dépression (96) délimitant avec des zones adjacentes (92) du couvercle (85) au moins une lumière annulaire d'évent (97) s'ouvrant vers l'extérieur du creuset (11) en direction de l'axe (5) du creuset (11).

24. Dispositif selon l'une quelconque des revendications 22 et 23, caracterisé en ce que le couvercle (85) est à usage unique, réalisé en un matériau facilitant sa destruction après utilisation, notamment en sable aggloméré au moyen d'une résin hydrophobe.

25. Dispositif selon l'une quelconque des revendications 22 à 24, caractérisé en ce que le couvercle (85) et le bord supérieur (39) du creuset présentent des conformations respectives autorisant un appui mutuel sensiblement continu et une étanchéification mutuelle.

26. Dispositif selon la revendication 25, caractérisé en ce qu'il comporte une coiffe filtrante (103) enveloppant au moins les moyens d'évent (97) du couvercle (85) et en ce que le couvercle (85) et la coiffe filtrante (103) présentent des conformations respectives autorisant un appui mutuel sensiblement continu et une étanchéification mutuelle.

27. Dispositif selon l'une quelconque des revendications 1 à 26, caractérisé en ce que le moule (10) est en sable aggloméré au silicate.

28. Creuset de soudure aluminothermique, délimitant une chambre (37) de réaction aluminothermique et destiné à être utilisé dans une orientation déterminée dans laquelle il présente en partie inférieure un trou de coulée (40) débouchant vers le haut dans ladite chambre et vers le bas dans une face inférieure (53), extérieure, suivant un axe vertical déterminé (5), ladite face inférieure (53) présentant au moins une zone plane (71, 72, 73, 74) approximativement perpendiculaire à l'axe (5) et autorisant le dépôt du creuset (11) sur un moule (10), avec emboîtement, alors que le creuset (11) occupe ladite orientation déterminée, caractérisé en ce que ladite face inférieure (53) présente des creux et/ou reliefs (56, 57, 71, 72, 73, 74, 82) agencés de telle sorte que, dans ladite orientation déterminée, le creuset (11) puisse reposer sur le moule (10) par ladite zone plane, avec emboîtement sur le moule (10) par lesdits creux et/ou reliefs (56, 57, 71, 72, 73, 74, 82).

29. Creuset selon la revendication 28, caractérisé en ce que ladite face inférieure (53) présente deux zones planes (71, 72, 73, 74) qui sont orientées approximativement perpendiculairement à l'axe (5) du creuset (11) et qui convergent mutuellement en formant entre elles un dièdre d'angle (α,δ) proche de 180°.

30. Creuset selon la revendication 29, caractérisé en ce que lesdites zones planes (71, 72, 73, 74) de la face inférieure (53) convergent sur l'axe (5).

31. Creuset selon l'une quelconque des revendications 29 et 30, caractérisé en ce que lesdites zones planes (71, 72, 73, 74) de la face inférieure (53) convergent vers le bas dans ladite orientation.

32. Creuset selon l'une quelconque des revendications 28 à 31, caractérisé en ce que ladite zone plane, au nombre d'au moins une, (71, 72, 73, 74) de la face inférieure (53) comporte une gorge (75, 76) délimitant un passage d'évent.

33. Creuset selon la revendication 32, caractérisé en ce que ladite gorge (75, 76) présente une section croissante dans un sens allant du trou de coulée (40) vers l'extérieur.

34. Creuset selon l'une quelconque des revendications 28 à 33, caractérisé en ce que sa face inférieure (53) présente autour du trou de coulée (40) une couronne annulaire (82) en saillie suivant ledit axe (5).

35. Creuset selon l'une quelconque des revendications 28 à 34, caractérisé en ce que sa face inférieure (53) présente, respectivement de part et d'autre du trou de coulée (40), des butées (56, 57) en saillie.

36. Creuset selon la revendication 35, caractérisé en ce que lesdites butées (56, 57) présentent des extrémités libres respectives (58, 59) coplanaires suivant un plan (60) perpendiculaire à l'axe (5).

37. Creuset selon la revendication 36 en combinaison avec la revendication 34, caractérisé en ce que ladite couronne (82) est placée en retrait par rapport audit plan (60).

38. Creuset selon l'une quelconque des revendications 28 à 37, caractérisé en ce qu'il comporte, à l'intérieur du trou de coulée (40), des moyens (51) de réception d'un obturateur thermofusible (41).

39. Creuset selon l'une quelconque des revendications 28 à 37, caractérisé en ce qu'il comporte un obturateur thermofusible (41) à l'intérieur du trou de coulée (40).

40. Creuset selon l'une quelconque des revendications 28 à 39, caractérisé en ce qu'il est à usage unique, réalisé en un matériau facilitant sa destruction après utilisation, notamment en sable aggloméré au moyen d'une résine hydrophobe.

41. Creuset selon la revendication 40, caractérisé en ce qu'il présente vers le haut, dans ladite orientation, un bord supérieur (39) délimitant une ouverture supérieure (38) de ladite chambre (37) et en ce qu'il porte extérieurement une frette annulaire (46) autour dudit bord supérieur (39).

42. Creuset selon la revendication 41, caractérisé en ce que ladite frette annulaire (46) est un ruban épousant étroitement ledit bord (39) et solidarisé avec lui.

43. Creuset selon l'une quelconque des revendications 40 à 42, caractérisé en ce qu'il comporte une armature annulaire noyée.

44. Creuset selon l'une quelconque des revendications 40 à 43, caractérisé en ce qu'il présente un désépaississement localisé à proximité du trou de coulée (40).

45. Creuset selon la revendication 44, caractérisé en ce qu'il présente à proximité du trou de coulée (40) un trou borgne (99) aménagé suivant un axe (100) parallèle à l'axe (5).

46. Creuset selon l'une quelconque des revendications 28 à 45, caractérisé en ce qu'il présente vers le haut, dans ladite orientation, un bord supérieur (39) délimitant une ouverture supérieure (38) de ladite chambre (37) et en ce qu'il porte par ledit bord (39) un couvercle rapporté (85) de fermeture de ladite chambre (37), muni de moyens d'évents (97).

47. Couvercle de creuset de soudure aluminothermique destiné à être rapporté sur un bord supérieur (39) d'un creuset (11) délimitant une ouverture supérieure (38) de la chambre (37) de réaction aluminothermique de celui-ci pour fermer ladite chambre (37), et muni de moyens d'évents (97).

48. Couvercle selon la revendication 47, caractérisé en ce qu'il présente suivant un axe (5) commun au creuset (11) une zone en dépression (96) délimitant avec des zones adjacentes (92) du couvercle (85) au moins une lumière annulaire d'évent (97) s'ouvrant vers l'extérieur du creuset (11) en direction de l'axe (5).

49. Couvercle selon l'une ,quelconque des revendications 47 et 48, caractérisé en ce qu'il est à usage unique, réalisé en un matériau facilitant sa destruction après utilisation, notamment en sable aggloméré au moyen d'un résine hydrophobe.

50. Couvercle selon l'une quelconque des revendications 47 à 49, caractérisé en ce qu'il comporte une coiffe filtrante (103) enveloppant au moins les moyens d'évent (97) et en ce que le couvercle (85) et la coiffe filtrante (103) présentent des conformations respectives autorisant un appui mutuel sensiblement continu et une étanchéification mutuelle.

## Claims

1. An aluminothermic welding device for the butt welding of two metal members (1, 2) such as railroad rails disposed facing one another so as to leave a space (8) therebetween, and comprising:
- a crucible (11) defining an aluminothermic reaction chamber (37) and adapted to be used in a predetermined crucible orientation in which the crucible (11) has in its lower portion a discharge aperture (40) opening upwardly into said chamber and downwardly into a lower external face (53) of the crucible (11) along a predetermined vertical axis (5) of the crucible (11),
- a mould (10) adapted to be fitted locally onto the two metal members (1, 2) to define therearound a mould cavity (9) in a predetermined mould orientation in which the mould (10) has in its upper portion a pouring bush (15) opening downwardly into said cavity (9) and upwardly into an outer upper face (23) of the mould (10) along a predetermined vertical axis (5) of the mould (10),
- said respective lower (53) face of the crucible (11) and upper face (23) of the mould (10) being formed with mutually complementary respective depressions and/or reliefs (15, 21, 22, 56, 57, 71, 72, 73, 74, 82) so as to define in the lower face (53) of the crucible (11) at least one flat zone (71, 72, 73, 74) substantially perpendicular to the axis (5) of the crucible (11) and in the upper face (23) of the mould (10) at least one flat zone (21, 22) substantially perpendicular to the axis (5) of the mould (10) and to enable the crucible (11) to be disposed on the mould (10) with mutual fitting in an operative position in which the crucible (11) and the mould (10) occupy said crucible and mould orientations respectively, the discharge aperture (40) and the pouring bush (15) are co-axial, while said flat zones (21, 22, 71, 72, 73, 74) of the lower face (53) of the crucible (11) and of the upper face (23) of the mould (10) face one another,
characterised in that the mould (10) is formed by a mould (10) which is intended to be used only once, is made from a material facilitating its destruction after welding, which forms the upper face (23) of the mould (10) and internally defines the pouring bush (15) and the mould cavity (9) and is adapted to accommodate said space (8) and respective zones of the metal members (1, 2) immediately adjacent thereto so that, to perform the welding, a filler metal obtained by aluminothermic reaction in the crucible (11) and entering the mould cavity (9) via the discharge aperture (10) and the pouring bush (15) fills said space (8), said depressions and/or reliefs (15, 21, 22, 56, 57, 71, 72, 73, 74, 82) being so devised that in said operative position the crucible (11) rests on the mould (10) via said respective flat zones (21, 22, 71, 72, 73, 74) bearing flat against one another.

2. A device according to Claim 1, characterised in that said respectively lower face (53) of the crucible (11) and upper face (23) of the mould (10) have two respective flat zones (21, 22, 71, 72, 73, 74) which are orientated substantially perpendicular to the axis (5) of the crucible (11) and the axis (5) of the mould (10) respectively and converge together to form therebetween a dihedron of angle (α, δ) close to 180°, the dihedra formed by said flat zones (71, 72, 73, 74) of the lower face (53) of the crucible (11) and said flat zones (21, 22) of the upper face (23) of the mould (10) being mutually complementary so that each of said flat zones (71, 72, 73, 74) of the lower face (53) of the crucible (11) bears flat against a respectively corresponding flat zone (21, 22) of the upper face (23) of the mould (10) in said operative position.

3. A device according to Claim 2, characterised in that said flat zones (71, 72, 73, 74) of the lower face (53) of the crucible (11) converge on the axis (5) of the crucible (11), and said flat zones (21, 22) of the upper face (23) of the mould (10) converge on the axis (5) of the mould (10).

4. A device according to any one of Claims 2 and 3, characterised in that said flat zones (21, 22, 71, 72, 73, 74) of the lower face (53) of the crucible (11) and the upper face (23) of the mould (10) respectively converge downwards in said operative position.

5. A device according to any of Claims 1 to 4, characterised in that said respectively lower face (53) of the crucible (11) and upper face (23) of the mould (10) have shapes such as to leave between the crucible and the mould at least one venting passage (75, 76) connecting the pouring bush (15) to the outside of the crucible (11) and the mould (10) in said operative position.

6. A device according to Claim 5, characterised in that said venting passage (75, 76) has a section which increases in a direction from the pouring bush (15) towards the outside of the crucible (11) and the mould (10).

7. A device according to any one of Claims 5 and 6, characterised in that at least one of said flat zones (71, 72, 73, 74) of the lower face (53) of the crucible (11) comprises a groove (75, 76) bounding said venting passage with the respectively corresponding flat zone (21, 22) of the upper face (23) of the crucible in said operative position.

8. A device according to any one of Claims 1 to 7, characterised in that said respectively lower face (53) of the crucible (11) and upper face (23) of the mould (10) have shapes such that they leave between the crucible (11) and the mould (10) at least one corundum passage (34) connecting the pouring bush (15) to the outside of the crucible (11) and the mould (10) in said operative position.

9. A device according to Claim 8, characterised in that at least one of said flat zones (21, 22) of the upper face (23) of the mould (10) is formed with a notch (30, 32, 34) bounding said corundum passage (34) with the respectively corresponding flat zone (71, 72) of the lower face (53) of the crucible (11) in said operative position.

10. A device according to any one of Claims 1 to 9, characterised in that the lower face (53) of the crucible (11) has around the discharge aperture (40) an annular rim (82) projecting along said axis (5) of the crucible and adapted to fit, with clearance, into the pouring bush (15) in said operative position.

11. A device according to any one of Claims 1 to 10, characterised in that the lower face (53) of the crucible (11) has respectively on either side of the discharge aperture (40) projecting abutments (56, 57) so disposed as to extend along the mould (10) respectively on either side of said upper face (23) thereof in said operative position.

12. A device according to Claim 11, characterised in that said abutments (56, 57) have respective free ends (58, 59) coplanar in a plane (60) perpendicular to the axis (5) of the crucible (11).

13. A device according to Claim 12 in combination with Claim 10, characterised in that said rim (82) is retracted in relation to said plane (60).

14. A device according to any of Claims 1 to 13, characterised in that the crucible (11) comprises, inside the discharge aperture (40), means (51) for accommodating a thermally meltable closure member (41).

15. A device according to any one of Claims 1 to 13, characterised in that the crucible (11) comprises a thermally meltable closure member (41) inside the discharge aperture (40).

16. A device according to any one of Claims 1 to 15, characterised in that the crucible (11) is intended to be used only once and is made from a material facilitating its destruction after use, being more particularly made of sand agglomerated by means of a hydrophobic resin.

17. A device according to Claim 16, characterised in that the crucible (11) has in the upward direction, in said crucible orientation, an upper edge (39) bounding an upper opening (38) of said chamber (37), and the crucible (11) bears externally an annular hoop (46) around said upper edge (39).

18. A device according to Claim 17, characterised in that said annular hoop (46) is a ribbon fitting tightly around said edge (39) and rigidly connected thereto.

19. A device according to any one of Claims 16 to 18, characterised in that the crucible comprises a sunken annular reinforcement.

20. A device according to any one of Claims 16 to 19, characterised in that the crucible (11) has a localised portion of reduced thickness straight above the pouring bush (15) in said operative position.

21. A device according to Claim 20, characterised in that the crucible (11) has adjacent the discharge aperture (40) a blind bore (99) extending along an axis (100) parallel with the axis (5) of the crucible (11) and entering the inside of the pouring bush (15) in said operative position.

22. A device according to any one of Claims 1 to 21, characterised in that the crucible (11) has in the upward direction, in said crucible orientation, an upper edge (39) bounding an upper opening (38) of said chamber (37), and the crucible (11) bears via said edge (39) an added cover (85) which closes said chamber (37) and is provided with venting means (97).

23. A device according to Claim 22, characterised in that the cover (85) has along the axis (5) of the crucible (11) a depressed zone (96) bounding with adjacent zones (92) of the cover (85) at least one annular venting aperture (97) opening towards the outside of the crucible (11) in the direction of the axis (5) of the crucible (11).

24. A device according to any one of Claims 22 and 23, characterised in that the cover (85) is intended to be used only once and is made from a material facilitating its destruction after use, more particularly being made of sand agglomerated with a hydrophobic resin.

25. A device according to any one of Claims 22 to 24, characterised in that the cover (85) and the upper edge (39) of the crucible have respective conforming surfaces enabling them to bear substantially continuously against one another and to seal against one another.

26. A device according to Claim 25, characterised in that it comprises a filter cap (103) enclosing at least the venting means (97) of the cover (85), and the cover (85) and the filter cap (103) have respective conforming surfaces enabling them to bear substantially continuously against one another and to seal against one another.

27. A device according to any of Claims 1 to 26, characterised in that the mould (10) is of sand agglomerated with silicate.

28. A crucible for aluminothermic welding, defining an aluminothermic reaction chamber (37) and adapted to be used in a predetermined orientation in which the crucible has in its lower portion a discharge aperture (40) opening upwardly into said chamber and downwardly into an external lower face (53) in accordance with a predetermined vertical axis (5), said lower face (53) having at least one flat zone (71, 72, 73, 74) substantially perpendicular to the axis (5) and enabling the crucible (11) to be disposed on a mould (10) with mutual fitting, when the crucible (11) occupies said predetermined orientation, characterised in that said lower face (53) has depressions and/or reliefs (56, 57, 71, 72, 73, 74, 82) so devised that in said predetermined orientation the crucible (11) can rest on the mould (10) via said flat zone, with mutual fitting with the mould (10) via said depressions and/or reliefs (56, 57, 71, 72, 73, 74, 82).

29. A crucible according to Claim 28, characterised in that said lower face (53) has two flat zones (71, 72, 73, 74) which are orientated substantially perpendicular to the axis (5) of the crucible (11) and which converge together to form therebetween a dihedron of angle (α, δ) close to 180°.

30. A crucible according to claim 29, characterised in that said flat zones (71, 72, 73, 74) of the lower face (53) converge on the axis (5).

31. A crucible according to Claims 29 and 30, characterised in that said flat zones (71, 72, 73, 74) of the lower face (53) converge downwardly in said orientation.

32. A crucible according to any one of Claims 28 to 31, characterised in that at said least one flat zone (71, 72, 73, 74) of the lower face (53) comprises a groove (75, 76) bounding a venting passage.

33. A crucible according to Claim 32, characterised in that said groove (75, 76) has a section which increases in a direction from the discharge aperture (40) towards the outside.

34. A crucible according to any one of Claims 28 to 33, characterised in that its lower face (53) has around the discharge aperture (40) an annular rim (82) projecting along said axis (5).

35. A crucible according to any one of Claims 28 to 34, characterised in that its lower face (53) has abutments (56, 57) which project on respective sides of the discharge aperture (40).

36. A crucible according to Claim 35, characterised in that said abutments (56, 57) have respective free ends (58, 59) coplanar in a plane (60) perpendicular to the axis (5).

37. A crucible according to Claim 36 in combination with Claim 34, characterised in that said rim (82) is recessed in relation to said plane (60).

38. A crucible according to any one of Claims 28 to 37, characterised in that it comprises, inside the discharge aperture (40), means (51) for accommodating a thermally meltable closure member (41).

39. A crucible according to any one of Claims 28 to 37, characterised in that it comprises a thermally meltable closure member (41) inside the discharge aperture (40).

40. A crucible according to any one of Claims 28 to 39, characterised in that it is intended to be used only once and is made from a material facilitating its destruction after use, being more particularly made of sand agglomerated by means of a hydrophobic resin.

41. A crucible according to Claim 40, characterised in that the crucible (11) has in the upward direction, in said crucible orientation, an upper edge (39) bounding an upper opening (38) of said chamber (37), and the crucible (11) bears externally an annular hoop (46) around said upper edge (39).

42. A crucible according to Claim 41, characterised in that said annular hoop (46) is a ribbon fitting tightly around said edge (39) and rigidly connected thereto.

43. A crucible according to any one of Claims 40 to 42, characterised in that the crucible comprises a sunken annular reinforcement.

44. A crucible according to any of Claims 40 to 43, characterised in that the crucible has a localised portion of reduced thickness adjacent the discharge aperture (40).

45. A crucible according to Claim 44, characterised in that the crucible (11) has, adjacent the discharge aperture (40), a blind bore (99) extending along an axis (100) parallel with the axis (5).

46. A crucible according to any one of Claims 28 to 45, characterised in that the crucible (11) has in the upward direction, in said crucible orientation, an upper edge (39) bounding an upper opening (38) of said chamber (37), and the crucible (11) supports via said edge (39) an added cover (85) which closes said chamber (37) and is provided with venting means (97).

47. A cover of a crucible for aluminothermic welding which is adapted to be attached to an upper edge (39) of a crucible (11) bounding an upper opening (38) of the aluminothermic reaction chamber (37) of the crucible in order to close said chamber (37) and is provided with venting means (97).

48. A cover according to Claim 47, characterised in that the cover (85) has along the axis (5) of the crucible (11) a depressed zone (96) bounding with adjacent zones (92) of the cover (85) at least one annular venting aperture (97) opening towards the outside of the crucible (11) in the direction of the axis (5) of the crucible (11).

49. A cover according to any one of Claims 47 and 48, characterised in that it is intended for use only once and is made from a material facilitating its destruction after use, being more particularly of sand agglomerated with a hydrophobic resin.

50. A cover according to any one of Claims 47 to 49, characterised in that it comprises a filter cap (103) enclosing at least the venting means (97) of the cover (85), and the cover (85) and the filter cap (103) have respective conforming surfaces enabling them to bear substantially continuously against one another and to seal against one another.

## Patentansprüche

1. Aluminothermische Schweißvorrichtung zum Aneinanderfügen von zwei Metallteilen (1, 2), wie beispielsweise Eisenbahnschienen, die zueinander derart angeordnet sind, daß dazwischen ein Zwischenraum (8) besteht, mit
- einem Tiegel (11), der eine aluminothermische Reaktionskammer (37) begrenzt und mit einer bestimmten Orientierung des Tiegels verwandt werden soll, in der der Tiegel (11) im unteren Teil ein Abstichloch (40) Zeigt, das nach oben in die genannte Kammer und nach unten in eine äußere Unterflache des Tiegels (11) und zwar längs einer bestimmten vertikalen Achse (5) des Tiegels (11) mündet,
- einer Form (10), die geeignet ist, örtlich die beiden Metallteile (1, 2) zu umschließen, indem sie um diese herum eine Formmatrize (9) in einer bestimmten Ausrichtung der Form bildet, in der diese Form (10) am oberen Teil einen Gießbecher (15) bildet, der nach unten in die Matrize (9) und nach oben in eine äußere Oberfläche (23) der Form (10) längs einer bestimmten vertikalen Achse (5) der Form (10) mündet,
- wobei die Unterfläche (53) des Tiegels (11) und die Oberfläche (23) der Form (10) Ausnehmungen und/oder Erhöhungen (15, 21, 22, 56, 57, 71, 72, 73, 74, 82) jeweils zeigen, die zueinander komplementär sind derart, daß sie in der Unterfläche (53) des Tiegels (11) wenigstens eine ebene Zone (71, 72, 73, 74) annähernd senkrecht zur Achse (5) des Tiegels (11) und in der Oberfläche (23) der Form (10) wenigstens eine ebene Zone (21, 22) annähernd senkrecht zur Achse (5) der Form (10) begrenzen und es ermöglichen, den Tiegel (11) auf der Form (10) mit gegenseitiger Ineingriffnahme in einer Arbeitsposition anzuordnen, in der der Tiegel (11) und die Form (10) die genannten Ausrichtungen jeweils des Tiegels und der Form einnehmen, das Gießloch (40) und der Gießbecher (15) koaxial liegen und die ebenen Zonen (21, 22, 71, 72, 73, 74) der Unterfläche (53) des Tiegels (11) und der Oberfläche (23) der Form (10) jeweils einander zugewandt sind,
dadurch gekennzeichnet, daß die Form (10) aus einer Einmalform (10) aus einem Material besteht, das seine Zerstörung nach dem Schweißen leicht macht, die die Oberfläche (23) der Form (10) bildet und innen den Gießbecher (15) und die Formmatrize (9) in passender Weise zur Aufnahme des Zwischenraumes (8) sowie der unmittelbar daneben liegenden jeweiligen Bereiche der Metallteile (1, 2) begrenzt, derart, daß zum Schweißen ein Aufschweißmetall, das durch eine aluminothermische Reaktion im Tiegel (11) erhalten wird und die Formmatritze (9) über das Gießloch (10) und den Gießbecher (15) füllt, den Zwischenraum (8) ausfüllt, und daß die Ausnehmungen und/oder Erhöhungen (15, 21, 22, 56, 57, 71, 72, 73, 74, 82) so angeordnet sind, daß in der Arbeitsposition der Tiegel (11) so auf der Form (10) sitzt, das die jeweiligen ebenen Zonen (21, 22, 71, 72, 73, 74) flach aneinander liegen.

2. Vorrichtung nach Anspruch 1, dadurch gekennzeichnet, daß die Unterfläche (53) des Tiegels (11) und die Oberfläche (23) der Form (10) jeweils zwei ebene Zonen (21, 22, 71, 72, 73, 74) zeigen, die annähernd senkrecht bezüglich der Achse (5) des Tiegels (11) und der Achse (5) der Form (10) ausgerichtet sind und die gegenseitig so konvergent verlaufen, daß zwischen ihnen ein V-förmiger Winkel (α, δ) nahe 180° gebildet ist, wobei die V-förmigen Winkel, die jeweils von den ebenen Zonen (71, 72, 73, 74) der Unterfläche (53) des Tiegels (11) und von den ebenen Zonen (21, 22) der Oberfläche (23) der Form (10) gebildet sind, zueinander derart komplementär sind, daß jede der genannten ebenen Zonen (71, 72, 73, 74) der Unterfläche (53) des Tiegels (11) zur flachen Anlage an einer jeweils entsprechenden ebenen Zone (21, 22) der Oberfläche (23) der Form (10) in der Arbeitsposition kommt.

3. Vorrichtung nach Anspruch 2, dadurch gekennzeichnet, daß die ebenen Zonen (71, 72, 73, 74) der Unterfläche (53) des Tiegels (11) zur Achse (5) des Tiegels (11) konvergent verlaufen und daß die ebenen Zonen (21, 22) der Oberfläche (23) der Form (10) zur Achse (5) der Form (10) konvergent verlaufen.

4. Vorrichtung nach einem der Ansprüche 2 und 3, dadurch gekennzeichnet, daß die ebenen Zonen (21, 22, 71, 72, 73, 74) der Unterfläche (53) des Tiegels (11) und der Oberfläche (23) der Form (10) in deren Arbeitsposition jeweils nach unten konvergent verlaufen.

5. Vorrichtung nach einem der Ansprüche 1 bis 4, dadurch gekennzeichnet, daß die Unterfläche (53) des Tiegels (11) und die Oberfläche (23) der Form (10) jeweils derartige Formen haben, daß sie zwischen dem Tiegel und der Form wenigstens einen Belüftungskanal (75, 76) frei lassen, der in der Arbeitsposition den Gießbecher (15) mit der Außenseite des Tiegels (11) und der Form (10) verbindet.

6. Vorrichtung nach Anspruch 5, dadurch gekennzeichnet, daß der Belüftungskanal (75, 76) einen sichelförmigen Querschnitt in Richtung von dem Gießbecher (15) zur Außenseite des Tiegels (11) und der Form (10) hat.

7. Vorrichtung nach einem der Ansprüche 5 und 6, dadurch gekennzeichnet, daß die wenigstens eine ebene Zone (71, 72, 73, 74) der Unterfläche (53) des Tiegels (11) eine Hohlkehle (75, 76) aufweist, die den Belüftungskanal zusammen mit der jeweils entsprechenden ebenen Zone (21, 22) der Oberfläche (23) der Form (10) in der Arbeitsposition begrenzt.

8. Vorrichtung nach einem der Ansprüche 1 bis 7, dadurch gekennzeichnet, daß die Unterfläche (53) des Tiegels (11) und die Oberfläche (23) der Form (10) jeweils derartige Formen haben, daß zwischen dem Tiegel (11) und der Form (10) wenigstens ein Korundkanal (34) frei gelassen ist, der den Gießbecher (15) mit der Außenseite des Tiegels (11) und der Form (10) in der Arbeitsposition verbindet.

9. Vorrichtung nach Anspruch 8, dadurch gekennzeichnet, daß die wenigstens eine ebene Zone (21, 22) der Oberfläche (23) der Form (10) eine Einkerbung (30, 32, 34) aufweist, die den Korundkanal (34) mit der entsprechenden jeweiligen ebenen Zone (71, 72) der Unterfläche (53) des Tiegels (11) in der Arbeitsposition begrenzt.

10. Vorrichtung nach einem der Ansprüch 1 bis 9, dadurch gekennzeichnet, daß die Unterfläche (53) des Tiegels (11) um das Gießloch (40) herum einen Ringkranz (82) aufweist, der längs der Achse (5) des Tiegels vorsteht und mit einem Spiel in den Gießbecher (15) in der Arbeitsposition eingreifen kann.

11. Vorrichtung nach einem der Ansprüche 1 bis 10, dadurch gekennzeichnet, daß die Unterfläche (53) des Tiegels (11) jeweils auf beiden Seiten des Gießloches (40) vorstehende Auflager (56, 57) aufweist, die derart angeordnet sind, daß sie jeweils auf beiden Seiten der Oberfläche (23) an der Form (10) in der Arbeitsposition entlang verlaufen.

12. Vorrichtung nach Anspruch 11, dadurch gekennzeichnet, daß die Auflager (56, 57) jeweils freie Enden (58, 59) haben, die zu einer senkrecht zur Achse (5) des Tiegels (11) liegende Ebene (60) koplanar sind.

13. Vorrichtung nach Anspruch 12 in Kombination mit Anspruch 10, dadurch gekennzeichnet, daß der Kranz (82) bezüglich dieser Ebene (60) zurückgezogen angeordnet ist.

14. Vorrichtung nach einem der Ansprüche 1 bis 13, dadurch gekennzeichnet, daß der Tiegel (11) im Inneren des Gießloches (40) Einrichtungen (51) zum Aufnehmen eines wärmeschmelzbaren Verschlusses (41) aufweist.

15. Vorrichtung nach einem der Ansprüch 1 bis 13, dadurch gekennzeichnet, daß der Tiegel (11) einen wärmeschmelzbaren Verschluß (41) im Inneren des Gießloches (40) aufweist.

16. Vorrichtung nach einem der Ansprüche 1 bis 15, dadurch gekennzeichnet, daß der Tiegel (11) ein Einmaltiegel aus einem Material, das seine Zerstörung nach der Benutzung leicht macht, insbesondere aus mittels eines hydrophoben Harzes agglomeriertem Sand ist.

17. Vorrichtung nach Anspruch 16, dadurch gekennzeichnet, daß der Tiegel (11) nach oben in der besagten Ausrichtung des Tiegels einen oberen Rand (29) aufweist, der eine obere Öffnung (38) der Kammer (37) begrenzt, und daß er außen eine Ringmanschette (46) um diesen oberen Rand (39) herum trägt.

18. Vorrichtung nach Anspruch 17, dadurch gekennzeichnet, daß die Ringmanschette (46) ein Band ist, daß eng an dem genannten Rand (39) anliegt und damit fest verbunden ist.

19. Vorrichtung nach einem der Ansprüche 16 bis 18, dadurch gekennzeichnet, daß der Tiegel eine eingelassene ringförmige Armierung aufweist.

20. Vorrichtung nach einem der Ansprüche 16 bis 19, dadurch gekennzeichet, daß der Tiegel (11) eine Verdünnung aufweist, die Lotrecht zum Gießbecher (15) in der Arbeitsposition angeordnet ist.

21. Vorrichtung nach Anspruch 20, dadurch gekennzeichnet, daß der Tiegel (11) in der Nähe des Gießloches (40) ein Sackloch (99) aufweist, das längs einer Achse (100) parallel zur Achse (5) des Tiegels (11) vorgesehen ist und in der Arbeitsposition in das Innere des Gießbechers (15) führt.

22. Vorrichtung nach einem der Ansprüche 1 bis 21, dadurch gekennzeichnet, daß der Tiegel (11) nach oben in der besagten Ausrichtung des Tiegels einen oberen Rand (39) aufweist, der eine obere Öffnung (38) der besagten Kammer (37) begrenzt, und daß der Tiegel an diesem Rand (39) einen Aufsatzdeckel (85) zum Schließen der Kammer (37) trägt, der mit Belüftungseinrichtungen (97) versehen ist.

23. Vorrichtung nach Anspruch 22, dadurch gekennzeichenet, daß der Deckel (85) längs der Achse (5) des Tiegels (11) einen eingesenkten Bereich (96) aufweist, der mit den benachbarten Zonen (92) des Deckels (85) wenigstens einen ringförmigen Lüftungsschlitz (97) begrenzt, der zur Außenseite des Tiegels (11) in Richtung der Achse (5) des Tiegels (11) mündet.

24. Vorrichtung nach einem der Ansprüche 22 und 23, dadurch gekennzeichnet, daß der Deckel ein Einmaldeckel aus einem Material, das seine Zerstörung nach der Benutzung leicht macht, insbesondere aus Sand ist, der mittels eines hydrophoben Harzes agglomeriert ist.

25. Vorrichtung nach einem der Ansprüche 22 bis 24, dadurch gekennzeichnet, daß der Deckel (85) und der obere Rand (39) des Tiegels jeweils Formen haben, die eine im wesentlichen durchgehende gegenseitige Anlage und eine gegenseitige Abdichtung erlauben.

26. Vorrichtung nach Anspruch 25, dadurch gekennzeichnet, daß sie eine Filterkappe (103) aufweist, die wenigstens die Belüftungseinrichtung (97) des Deckels (85) umhüllt, und daß der Deckel (85) und die Filterkappe (103) jeweils Formen haben, die eine im wesentlichen durchgehende gegenseitige Anlage und gegenseitige Abdichtung erlauben.

27. Vorrichtung nach einem der Ansprüche 1 bis 26, dadurch gekennzeichnet, daß die Form (10) aus Silikatformsand besteht.

28. Aluminothermischer Schweißtiegel, der eine aluminothermische Reaktionskammer (37) begrenzt und dazu bestimmt ist, in einer bestimmten Ausrichtung verwandt zu werden, in der er am unteren Teil ein Gießloch (40) aufweist, das nach oben in die genannte Kammer und nach unten in eine äußere Unterfläche (53) längs einer bestimmten vertikalen Achse (5) mündet, wobei die Unterfläche (53) wenigstens eine ebene Zone (71, 72, 73, 74) etwa senkrecht zur Achse (5) aufweist und es erlaubt, den Tiegel (11) auf einer Form (10) mit Einpassung anzuordnen, während der Tiegel (11) die bestimmte besagte Ausrichtung einnimmt, dadurch gekennzeichnet, daß die Unterfläche (53) Ausnehmungen und/oder Erhöhungen (56, 57, 71, 72, 73, 74, 82) aufweist, die derart vorgesehen sind, daß in der bestimmten besagten Ausrichtung der Tiegel (11) auf der Form (10) an der ebenen Zone mit Ineingriffnahme mit der Form(10) an den Ausnehmungen und/oder Erhöhungen (56, 57, 71, 72, 73, 74, 82) angeordnet werden kann.

29. Tiegel nach Anspruch 28, dadurch gekennzeichnet, daß die Unterfläche (53) zwei ebenen Zonen (71, 72, 73, 74) aufweist, die annähernd senkrecht zur Achse (5) des Tiegels (11) ausgerichtet sind und die gegenseitig so konvergent verlaufen, daß dazwischen ein V-förmiger Winkel (α, δ) nahe 180° gebildet ist.

30. Tiegel nach Anspruch 29, dadurch gekennzeichnet, daß die ebenen Zonen (71, 72, 73, 74) der Unterfläche (53) zur Achse (5) konvergent verlaufen.

31. Tiegel nach einem der Ansprüche29 und 30, dadurch gekennzeichnet, daß die ebenen Zonen (71, 72, 73, 74) der Unterfläche (53) in der besagten Ausrichtung nach unten konvergent verlaufen.

32. Tiegel nach einem der Ansprüche 28 bis 31, dadurch gekennzeichnet, daß die wenigstens eine ebene Zone (71, 72, 73 74) der Unterfläche (53) eine Hohlkehle (75, 76) aufweist, die einen Belüftungskanal begrenzt.

33. Tiegel nach Anspruch 32, dadurch gekennzeichnet, daß die Hohlkehle (75, 76) in der Richtung vom Gießloch (40) nach außen einen sichelförmigen Querschnitt hat.

34. Tiegel nach einem der Ansprüche 28 bis 33, dadurch gekennzeichnet, daß seine Unterfläche (53) um das Gießloch (40) herum einen Ringkranz (82) aufweist, der längs der Achse (5) vorsteht.

35. Tiegel nach einem der Ansprüche 28 bis 34, dadurch gekennzeichnet, daß seine Unterfläche (53) auf beiden Seiten des Gießloches (40) jeweils vorstehende Auflager (56, 57) aufweist.

36. Tiegel nach Anspruch 35, dadurch gekennzeichnet, daß die Auflager (56, 57) jeweils freie Enden (58, 59) haben, die zu einer Ebene (60) senkrecht zur Achse (5) koplanar sind.

37. Tiegel nach Anspruch 36 in Kombination mit Anspruch 34, dadurch gekennzeichnet, daß der Kranz (82) bezüglich dieser Ebene (60) zurückgezogen angeordnet ist.

38. Tiegel nach einem der Ansprüche 28 bis 37, dadurch gekennzeichnet, daß er im Inneren des Gießloches (40) Einrichtungen (51) zur Aufnahme eines wärmeschmelzbaren Verschlusses (41) aufweist.

39. Tiegel nach einem der Ansprüche 28 bis 37, dadurch gekennzeichnet, daß er einen wärmeschmelzbaren Verschluß (41) im Inneren des Gießloches (40) aufweist.

40. Tiegel nach einem der Ansprüche 28 bis 39, dadurch gekennzeichnet, daß er ein Einmaltiegel aus einem Material, das seine Zerstörung nach der Benutzung leicht macht, insbesondere aus mittels eines hydrophoben Harzes agglomeriertem Sand ist.

41. Tiegel nach Anspruch 40, dadurch gekennzeichnet, daß er in der besagten Ausrichtung nach oben einen oberen Rand (39) aufweist, der eine obere Öffnung (38) der besagten Kammer (37) begrenzt, und daß er außen eine Ringmanschette (46) um diesen oberen Rand (39) trägt.

42. Tiegel nach Anspruch 41, dadurch gekennzeichnet, daß die Ringmanschette (46) ein Band ist, das den Rand (39) eng umschließt und damit fest verbunden ist.

43. Tiegel nach einem der Ansprüche 40 bis 42, dadurch gekennzeichnet, daß er eine eingelassene ringförmige Armierung aufweist.

44. Tiegel nach einem der Ansprüche 40 bis 43, dadurch gekennzeichnet, daß er eine Verdünnung aufweist, die sich in der Nähe des Gießloches (40) befindet.

45. Tiegel nach Anspruch 44, dadurch gekennzeichnet, daß er in der Nähe des Gießloches (40) ein Sackloch (99) aufweist, das längs einer Achse (100) parallel zur Achse (5) ausgebildet ist.

46. Tiegel nach einem der Ansprüche 28 bis 45, dadurch gekennzeichnet, daß er in der besagten Ausrichtung nach oben einen oberen Rand (39) aufweist, der eine obere Öffnung (38) der besagten Kammer (37) begrenzt, und daß er an diesem Rand (39) einen Aufsatzdeckel (85) zum Schließen der besagten Kammer (37) trägt, der mit Belüftungseinrichtungen (97) versehen ist.

47. Deckel für einen aluminothermischen Schweißtiegel zum Aufsetzen auf den oberen Rand (39) eines Tiegels (11), der eine obere Öffnung (38) seiner aluminothermischen Reaktionskammer (37) umschließt, um diese Öffnung (37) zu schließen, und der mit Belüftungseinrichtungen (97) versehen ist.

48. Deckel nach Anspruch 47, dadurch gekennzeichnet, daß er längs einer mit dem Tiegel (11) gemeinsamen Achse (5) eine eingesenkte Zone (96) aufweist, die mit benachbarten Zonen (92) des Deckels (85) wenigstens einen ringförmigen Belüftungsschlitz (97) begrenzt, der zur Außenseite des Tiegels (11) in Richtung der Achse (5) mündet.

49. Deckel nach einem der Ansprüche 47 und 48, dadurch gekennzeichnet, daß er ein Einmaldeckel aus einem Material, das seine Zerstörung nach der Benutzung leicht macht, insbesondere aus mittels eines hydrophoben Harzes agglomeriertem Sand ist.

50. Deckel nach einem der Ansprüche 47 bis 49, dadurch gekennzeichnet, daß er eine Filterkappe (103) aufweist, die wenigstens die Belüftungseinrichtungen (97) umhüllt, und daß der Deckel (85) und die Filterkappe (103) jeweils Formen haben, die eine im wesentlichen durchgängige gegenseitige Anlage und gegenseitige Abdichtung erlauben.
